(19) Europäisches Patentamt
European Patent Office
Office européen des brevets

(11) **EP 4 694 474 A1**

(12) **EUROPEAN PATENT APPLICATION**
published in accordance with Art. 153(4) EPC

(43) Date of publication:
**11.02.2026 Bulletin 2026/07**

(21) Application number: **23946965.3**

(22) Date of filing: **28.07.2023**

(51) International Patent Classification (IPC):
**H04W 72/1268** (2023.01)

(52) Cooperative Patent Classification (CPC):
**H04W 72/1268**

(86) International application number:
**PCT/CN2023/110007**

(87) International publication number:
**WO 2025/025009 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WU, Zuomin
Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD, TERMINAL DEVICE, AND NETWORK DEVICE**

(57) The present application provides a wireless communication method, a terminal device, and a network device. The method comprises: a terminal device determines a first uplink resource in a first cell; and the terminal device sends a first uplink channel/signal by means of the first uplink resource, the first uplink channel/signal being used for requesting to send a first system message. When the terminal device needs the first system message (for example, the terminal device needs to access a network), the terminal device can determine the first uplink resource for sending the first uplink channel/signal, so as to transmit the first uplink channel/signal to request a network device to send the first system message. The network device can also detect the first uplink channel/signal on the basis of the first uplink resource, so as to send the first system message. Therefore, on the basis of the present application, the transmission of the first system message can be requested at an appropriate time, thereby improving communication efficiency and reducing energy consumption.

```
Terminal device                    Network device
      │                                  │
┌─────┴──────────────┐       ┌───────────┴────────────┐
│ S210 Determining a │       │ S212 Determining a     │
│ first uplink       │       │ first uplink           │
│ resource in a      │       │ resource in a          │
│ first cell         │       │ first cell             │
└─────┬──────────────┘       └───────────┬────────────┘
      │  S220 A first uplink channel/signal
      │ ─────────────────────────────────▶
      │                      ┌───────────┴────────────┐
      │                      │ S230 Detecting the     │
      │                      │ first uplink           │
      │                      │ channel/signal         │
      │                      └───────────┬────────────┘
      │                                  │
```

**FIG. 2**

## Description

TECHNICAL FIELD

The present disclosure relates to the technical field of communications, and more particularly to, methods for wireless communication, a terminal device and a network device.

BACKGROUND

Network energy saving is of great significance to environmental protection, expenditure control and other aspects. In order to realize the network energy saving, one network layout method is that when the network is in an idle state, a network device does not transmit a first system message. For example, the first system message may include a common channel/signal, such as, a synchronization signal/physical broadcast channel (PBCH) block (SSB or SS/PBCH block) or a system information broadcast 1 (SIB1).

SUMMARY

The present disclosure provides methods for wireless communication, a terminal device and a network device. Various aspects of the present disclosure are described below.

In a first aspect, there is provided a method for wireless communication, and the method includes that: a terminal device determines a first uplink resource in a first cell; and the terminal device transmits a first uplink channel/signal via the first uplink resource. The first uplink channel/signal is used for requesting transmission of a first system message.

In a second aspect, there is provided a method for wireless communication, and the method includes that: a network device receives a first uplink channel/signal via a first uplink resource in a first cell. The first uplink channel/signal is used for requesting transmission of a first system message.

In a third aspect, there is provided a terminal device including a determination unit and a first transmission unit. The determination unit is configured to determine a first uplink resource in a first cell. The first transmission unit is configured to transmit a first uplink channel/signal via the first uplink resource. The first uplink channel/signal is used for requesting transmission of a first system message.

In a fourth aspect, there is provided a network device including a detection unit. The detection unit is configured to detect a first uplink channel/signal via a first uplink resource in a first cell. The first uplink channel/signal is used for requesting transmission of a first system message.

In a fifth aspect, there is provided a terminal device including a memory and a processor. The memory is configured to store a program, and the processor is configured to invoke the program in the memory to perform the method in the first aspect.

In a sixth aspect, there is provided a network device including a memory and a processor. The memory is configured to store a program, and the processor is configured to invoke the program in the memory to perform the method in the second aspect.

In a seventh aspect, there is provided an apparatus including a processor configured to invoke a program from a memory to perform the method in the first aspect.

In an eighth aspect, there is provided an apparatus including a processor configured to invoke a program from a memory to perform the method in the second aspect.

In a ninth aspect, there is provided a chip including: a processor configured to invoke a program from a memory, to enable a device on which the chip is mounted to perform the method in the first aspect.

In a tenth aspect, there is provided a chip including: a processor configured to invoke a program from a memory, to enable a device on which the chip is mounted to perform the method in the second aspect.

In an eleventh aspect, there is provided a computer-readable storage medium having stored thereon a program that, when executed by a computer, causes the computer to perform the method in the first aspect.

In a twelfth aspect, there is provided a computer-readable storage medium having stored thereon a program that, when executed by a computer, causes the computer to perform the method in the second aspect.

In a thirteenth aspect, there is provided a computer program product including a program, where the program causes a computer to perform the method in the first aspect.

In a fourteenth aspect, there is provided a computer program product including a program, where the program causes a computer to perform the method in the second aspect.

In a fifteenth aspect, there is provided a computer program, where the computer program causes a computer to perform the method in the first aspect.

In a sixteenth aspect, there is provided a computer program, where the computer program causes a computer to perform the method in the second aspect.

When the terminal device needs the first system message (e.g., when the terminal device needs to access the network), the terminal device may determine the first uplink resource for transmitting the first uplink channel/signal, thereby transmitting the first uplink channel/signal to request the network device to transmit the first system message. The network device may detect the first uplink channel/signal based on the first uplink resource, thereby transmitting the first system message. Therefore, based on the present disclosure, the first system message may be requested and transmitted at an appropriate time, thereby improving a communication efficiency and reducing an energy consumption.

BRIEF DESCRIPTION OF THE DRAWINGS

FIG. 1A to FIG. 1C are example diagrams of communication systems to which embodiments of the present disclosure are applied.
FIG. 2 is a schematic flowchart of a method for wireless communication according to an embodiment of the present disclosure.
FIG. 3A and FIG. 3B are example diagrams illustrating relationships between a first downlink resource and a first uplink resource.
FIG. 4 is an example diagram of a second downlink resource.
FIG. 5A to FIG. 5C are examples for determining a time-domain position of a first uplink resource based on system information block 1 (SIB1) physical downlink control channel (PDCCH) configuration information.
FIG. 6 is a schematic structural diagram of a terminal device according to an embodiment of the present disclosure.
FIG. 7 is a schematic structural diagram of a network device according to an embodiment of the present disclosure.
FIG. 8 is a schematic structural diagram of an apparatus according to an embodiment of the present disclosure.

DETAILED DESCRIPTION

The technical solutions in the embodiments of the present disclosure will be described in conjunction with the accompanying drawings in the embodiments of the present disclosure. It is apparent that the described embodiments are only part of the embodiments of the present disclosure, not all of the embodiments. All other embodiments obtained by those of ordinary skill in the art based on the embodiments in the present disclosure without paying creative work shall fall within the scope of protection of the present disclosure.

The technical solutions in the embodiments of the present disclosure may be applied to various communication systems, such as: a global system of mobile communication (GSM), a code division multiple access (CDMA) system, a wideband CDMA (WCDMA) system, a general packet radio service (GPRS) system, a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) system or other communication systems, for example, a future communication system like a 6th-generation (6G) mobile communication system and a beyond 5G (B5G) mobile communication system.

Generally, the number of connections supported by a traditional communication system is limited and the connections are easy to be implemented. However, with the development of the communication technology, a mobile communication system will not only support traditional communications, but also support, for example, a device to device (D2D) communication, a machine to machine (M2M) communication, a machine type communication (MTC), a vehicle to vehicle (V2V) communication, or a vehicle to everything (V2X) communication, etc. The embodiments of the present disclosure may also be applied to these communication systems.

The communication system in the embodiments of the present disclosure may be applied to a carrier aggregation (CA) scenario, a dual connectivity (DC) scenario, and may also be applied to a standalone (SA) network deployment scenario.

The communication system in the embodiments of the present disclosure may be applied to an unlicensed spectrum. The unlicensed spectrum may also be considered to be a shared spectrum. Alternatively, the communication system in the embodiments of the present disclosure may also be applied to a licensed spectrum. The licensed spectrum may also be considered to be an unshared spectrum.

The embodiments of the present disclosure may be applied to the NTN system, and may also be applied to a terrestrial network (TN) system. By way of example and not limitation, the NTN system includes an NR-based NTN system and an internet of things (IoT)-based NTN system.

In the future evolved communication systems, such as the B5G or the 6G, a distributed multiple in multiple out (MIMO) scenario and/or a massive MIMO scenario may be involved. A system corresponding to the distributed MIMO scenario may be referred to as a distributed antenna system. A system corresponding to the massive MIMO scenario may be referred to as a massive antenna matrix system. In some cases, the distributed antenna system and/or the massive antenna matrix system may also support a cell-free networking scenario or a UE-centric networking scenario. It is to be understood that the embodiments of the present disclosure are also applicable to these scenarios.

The embodiments of the present disclosure are described in connection with a network device and a terminal device. The terminal device may also be referred to as user equipment (UE), an access terminal, a user unit, a user station, a mobile unit, a mobile station (MS), a mobile terminal (MT), a remote station, a remote terminal, a mobile device, a user terminal, a terminal, a wireless communication device, a user agent or a user device, etc.

In the embodiments of the present disclosure, the terminal device may be a station (STA) in the WLAN, a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN), etc.

In the embodiments of the present disclosure, the terminal device may be a device that provides voice and/or data connectivity to a user, and may be used to connect people, objects and machines, such as a handheld device with a wireless connection function, a vehicle-mounted device, etc. The terminal device in the embodiments of the present disclosure may be a mobile phone, a Pad, a notebook computer, a palmtop computer, a mobile internet device (MID), a wearable device, a virtual reality (VR) device, an augmented reality (AR) device, a wireless terminal in an industrial control, a wireless terminal in a self driving, a wireless terminal in a remote medical surgery, a wireless terminal in a smart grid, a wireless terminal in a transportation safety, a wireless terminal in a smart city, or a wireless terminal in a smart home, etc. Optionally, the UE may act as a base station. For example, the UE may act as a scheduling entity that provides sidelink signal(s) between UEs in the V2X, the D2D or the like. For example, a cellular phone communicates with a car by using the sidelink signal(s). The cellular phone communicates with the device in the smart home without relaying communication signal(s) by the base station.

In the embodiments of the present disclosure, the terminal device may be deployed on land, including indoors or outdoors, as hand-held, wearable or vehicle-mounted devices; or may be deployed on the water (such as on ships); or may be deployed in the air (such as on airplanes, balloons and satellites).

In the embodiments of the present disclosure, the terminal device may be a mobile phone, a tablet computer (pad), a computer with a wireless transceiver function, a VR terminal device, an AR terminal device, a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, or a wireless terminal device in a smart home, etc. The terminal device involved in the embodiments of the present disclosure may also be referred to as a terminal, a UE, an access terminal device, a vehicle-mounted terminal, an industrial control terminal, a UE unit, a UE station, a mobile station, a mobile unit, a remote station, a remote terminal device, a mobile device, a UE terminal device, a wireless communication device, a UE agent, or a UE device. The terminal device may be either fixed or mobile.

By way of example but not limitation, in the embodiments of the present disclosure, the terminal device may also be a wearable device. The wearable device may also be referred to as a wearable smart device, which is a general name of wearable devices developed by applying wearable technology and intelligently designing daily wearable items, such as glasses, gloves, watches, clothing and shoes. The wearable device is a portable device that is worn directly on the body or integrated into the clothes or accessories of a user. The wearable device is not only a hardware device, but also may realize powerful functions through software support, data interaction and cloud interaction. Broadly defined, the wearable smart devices include those with comprehensive functions, large sizes and an ability to perform whole or partial functions independently of a smart phone, such as a smart watch or smart glasses, as well as those focused on specific application functions that require integration with another device like the smart phone, such as various smart bracelets and smart jewelry for monitoring vital signs.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a radio access network (RAN) node (or device) that accesses the terminal device to a wireless network. The base station may broadly cover or be replaced with following names, such as, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node or similar device, or a combination thereof. The base station may also be a communication module, a modem or a chip provided inside the aforementioned device or apparatus. The base station may also be a device that undertakes a function of the base station in a mobile switching center, a D2D communication, a V2X communication, or an M2M communication, or may be a device in a network side in a 6G network, a device that undertakes a function of the base station in a future communication system, etc. The base station may support networks with the same access technology or different access technologies. The specific technology and the specific device form adopted by the network device are not limited in the embodiments of the present disclosure.

The base station may be fixed or mobile. For example, a helicopter or unmanned aerial vehicle may be configured to act as a mobile base station, and one or more cells may be moved based on the location of the mobile base station. In other examples, the helicopter or unmanned aerial vehicle may be configured to function as a device that communicates with another base station.

In some deployments, the network device in the embodiments of the present disclosure may be a CU or a DU, or the network device may include both the CU and the DU. The gNB may also include an AAU.

The network device and the terminal device may be deployed on land, including indoors or outdoors, as hand-held devices or vehicle-mounted devices. The network device and the terminal device may also be deployed on the water. The network device and the terminal device may also be deployed in airplanes, in balloons and in satellites in the air. The scenario where the network device and the terminal device are located is not limited in the embodiments of the present disclosure.

By way of example and not limitation, in the embodiments of the present disclosure, the network device may have mobility characteristics, for example, the network device may be a mobile device. In some embodiments of the present disclosure, the network device may be a satellite, a balloon station, and the like. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments of the present disclosure, the network device may also be a base station located on land, water, etc.

In the embodiments of the present disclosure, the network device may provide services for a cell, and the terminal device communicates with the network device via transmission resources (e.g., frequency-domain resources, or spectrum resources) used by the cell. The cell may be a cell corresponding to the network device (e.g., the base station), and the cell may belong to a macro base station or a base station corresponding to a small cell. The small cell may include a metro cell, a micro cell, a pico cell, a femto cell, etc. These small cells have characteristics of small coverage and low transmission power, and are suitable for providing high-speed data transmission services.

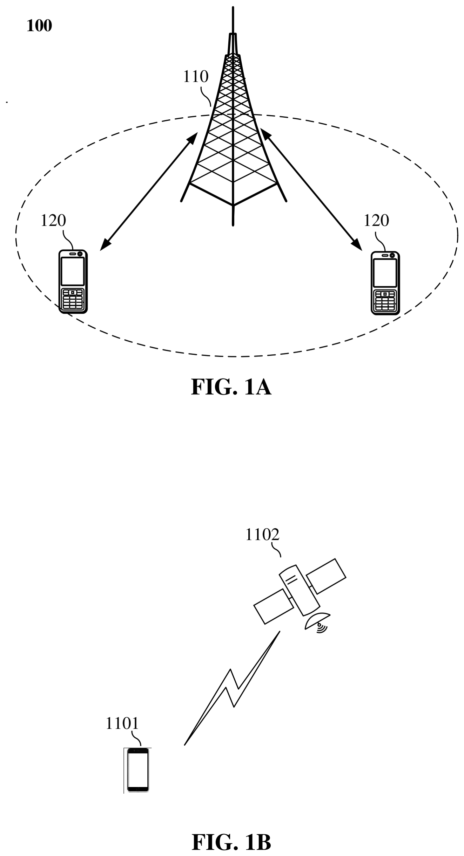

Exemplarily, FIG. 1A is a schematic diagram of an architecture of a communication system according to an embodiment of the present disclosure. As shown in FIG. 1A, the communication system 100 may include a network device 110 that communicates with a terminal device 120 (or referred to as a communication terminal, or a terminal). The network device 110 may provide communication coverage for a particular geographic area and may communicate with terminal devices located within the coverage.

FIG. 1A exemplarily illustrates one network device and two terminal devices. In some embodiments of the present disclosure, the communication system 100 may include multiple network devices, and other numbers of terminal devices may be included within the coverage of each network device, which is not limited by the embodiments of the present disclosure.

Exemplarily, FIG. 1B is a schematic diagram of another architecture of a communication system according to an embodiment of the present disclosure. With reference to FIG. 1B, the communication system includes a terminal device 1101 and a satellite 1102, and the terminal device 1101 may communicate wirelessly with the satellite 1102. The network formed between the terminal device 1101 and the satellite 1102 may also be referred to as the NTN. In the architecture of the communication system illustrated in FIG. 1B, the satellite 1102 may function as a base station and may directly communicate with the terminal device 1101. Within this system architecture, the satellite 1102 may be called the network device. In some embodiments of the present disclosure, multiple network devices 1102 may be included in the communication system, and other numbers of terminal devices may be included within the coverage of each network device 1102, which is not limited in the embodiments of the present disclosure.

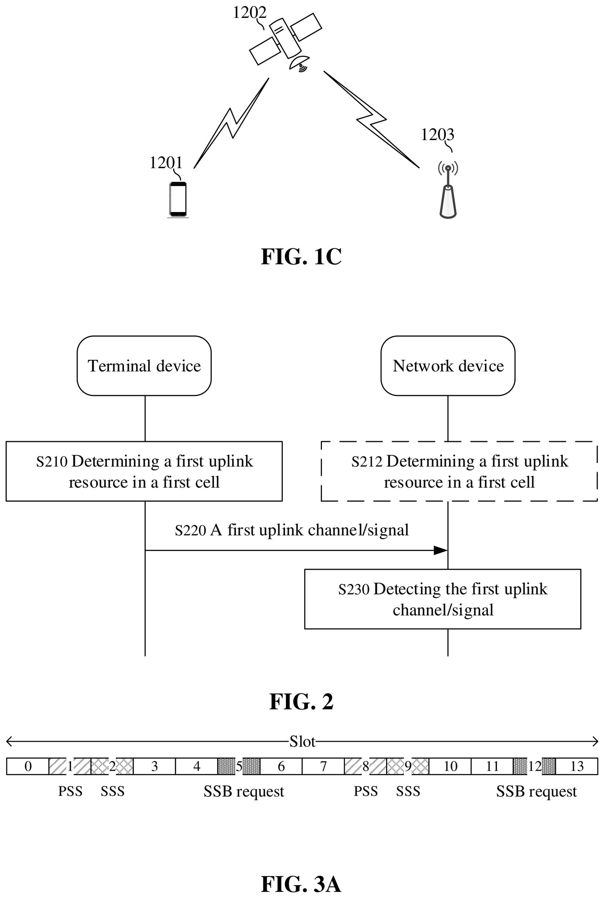

Exemplarily, FIG. 1C is a schematic diagram of another architecture of a communication system according to an embodiment of the present disclosure. With reference to FIG. 1C, the communication system includes a terminal device 1201, a satellite 1202 and a base station 1203. The terminal device 1201 may communicate wirelessly with the satellite 1202, and the satellite 1202 may communicate with the base station 1203. The network formed between the terminal device 1201, the satellite 1202 and the base station 1203 may also be referred to as the NTN. In the architecture of the communication system illustrated in FIG. 1C, the satellite 1202 may not function as the base station, and the communication between the terminal device 1201 and the base station 1203 needs to be relayed through the satellite 1202. Within this system architecture, the base station 1203 may be called the network device. In some embodiments of the present disclosure, multiple network devices 1203 may be included in the communication system, and other numbers of terminal devices may be included within the coverage of each network device 1203, which is not limited in the embodiments of the present disclosure.

It is to be noted that FIG. 1A to FIG. 1C only illustrate systems to which the present disclosure is applied by way of examples, and the methods in the embodiments of the present disclosure may also be applied to other systems, such as a 5G communication system, an LTE communication system, and the like, which is not limited in the embodiments of the present disclosure.

In some embodiments of the present disclosure, the wireless communication systems shown in FIG. 1A to FIG. 1C may further include other network entities, such as, a mobility management entity (MME), an access and mobility management function (AMF), and the like, which is not limited in the embodiments of the present disclosure.

It is to be understood that a device having a communication function in the network or system in the embodiments of the present disclosure may be referred to as a communication device. The communication system 100 illustrated in FIG. 1A is taken as an example, the communication device may include the network device 110 and the terminal devices 120 that both have the communication function, and the network device 110 and the terminal devices 120 may be the devices described above, which will not be elaborated herein. The communication device may also include other devices in the communication system 100, such as, a network controller, an MME and other network entities, which are not limited in the embodiments of the present disclosure.

In order to facilitate understanding, related technologies involved in the embodiments of the present disclosure are described below. The following related technologies, used as optional solutions, may be combined with the technical solutions in the embodiments of the present disclosure in various ways, and the combinations belong to the scope of protection of the embodiments of the present disclosure. The embodiments of the present disclosure include at least some of the following contents.

SSB transmission

In some communication systems (e.g., the NR system), an initial access procedure of the terminal device may be completed by detecting an SSB on a sync raster. The SSB is transmitted via a discovery burst transmission window or an SSB transmission window. The discovery burst transmission window or the SSB transmission window may occur periodically, and the periodicity may be configured by the network device through a high layer parameter. The discovery burst transmission window or the SSB transmission window may include a set of candidate positions for SSB transmission. A set of SSB transmission occasions (also referred to as an SSB burst set) may include one or more SSBs, one SSB includes 4 symbols in the time domain, and the set of SSB transmission occasions should complete the transmission within a half frame (i.e., 5 ms).

For a frequency range 1 (FR1), there are up to 8 SSBs in one SSB burst set. A maximum of 3 bits are required to indicate indexes of these 8 SSBs. These 3 bits are implicitly carried by a PBCH demodulation reference symbol (DMRS) sequence. Herein, there are 8 different PBCH DMRS sequences, each of which corresponds to a respective one of 8 different SSB indexes.

For an FR2, due to the higher frequency, beam energy is required to be more concentrated to ensure a long-distance signal transmission, and a coverage angle of a single beam will be smaller. Therefore, more beams are required to ensure the coverage of the cell. At present, up to 64 SSBs may be configured in the FR2, and 6 bits are required to indicate the indexes of these 64 SSBs. The lower 3 bits among the 6 bits are still carried by the PBCH DMRS sequence, and the additional higher 3 bits are directly indicated by a load content of the PBCH.

A primary function of the SSB index is to allow the terminal device to obtain system timing information. Beyond this, the SSB index serves another purpose, i.e., the SSB index is used for indicating a quasi co-location (QCL) relationship between SSBs. QCL means that large-scale parameters of a channel experienced by symbols on a certain antenna port may be inferred from a channel experienced by symbols on another antenna port. The large-scale parameters may include a delay spread, an average delay, a Doppler spread, a Doppler frequency shift, spatial reception parameters, etc. Specifically, for the SSB, in some communication systems (e.g., the 5G system), SSBs carried by different beams constitute an SSB burst set. The different SSB indexes not only correspond to different pieces of SSB time-domain position information in the burst set, but also correspond to specific beam information for the SSB transmission. It is considered that there is a QCL relationship between SSBs with the same SSB index. In other words, the same or similar large-scale parameters of the channel are experienced by the SSBs with the same SSB index. The terminal device may assume that the network device adopts the same beam for transmitting these SSBs. It is considered that there is no QCL relationship between SSBs corresponding to different SSB indexes, because the SSBs may come from different transmission beams of the network devices and experience different transmission characteristics of the channel.

During the initial access procedure, the terminal device attempts to search for the SSB through a predefined possible time-frequency position of the SSB. Furthermore, the terminal device obtains a time synchronization and frequency synchronization, a radio frame timing, and a cell ID through the detected SSB.

Information carried by the PBCH in the SSB includes a master information block (MIB), a MIB message type indication, and a PBCH information bit. Herein, information included in the MIB has a length of 23 bits in total, as shown in Table 1. After adding 1-bit MIB message type indication, the message generated by the high layer includes A=24 bits. The A bits of information is the first A bits of information carried in the PBCH, and is denoted as $a_0, a_1, ..., a_{A-1}$.

Table 1

| MIB information | Number of bits |
|---|---|
| System frame number (SFN) | 6 |
| Common subcarrier spacing (denoted as subCarrierSpacingCommon) | 1 |
| Subcarrier offset of an SSB (denoted as $k_{SSB}$) | 4 |
| TypeA DMRS position | 1 |
| SIB1 PDCCH configuration (denoted as pdcch-ConfigSIB1) | 8 |
| Cell barred (denoted as cellBarred) | 1 |
| Intra frequency reselection (denoted as intraFreqReselection) | 1 |
| Spare bit (denoted as spare) | 1 |
| Total | 23 |

In addition to the aforementioned 24 bits, the physical layer generates an additional 8 bits of PBCH information, denoted as $a_A, a_{A+1}, ..., a_{A+7}$.

It can be seen that the PBCH may include a total of 32 bits of information without considering the cyclic redundancy check (CRC).

$a_A, a_{A+1}, a_{A+2}, a_{A+3}$ represent the 4th, 3rd, 2nd, and 1st least significant bits (LSBs) of the SFN, respectively.

$a_{A+4}$ is a half-frame indication bit for indicating that the SSB burst set corresponds to the first half frame or the last half frame.

For the licensed spectrum in the FR1, $a_{A+5}$ indicates the most significant bit (MSB) of the $k_{SSB}$. $a_{A+6}$ and $a_{A+7}$ are reserved bits.

For the FR2, $a_{A+5}, a_{A+6}, a_{A+7}$ represent the 6th, 5th, and 4th bits of the SSB index, respectively.

$k_{SSB}$ indication information indicates the number of subcarriers between subcarrier 0 in the $N_{SSB-CRB}$ and subcarrier 0 of the SSB. For the licensed spectrum in the FR1, $k_{SSB}$ includes 5 bits. The 4 bits of LSB in the $k_{SSB}$ are indicated by the subcarrier offset of the SSB in the MIB. The MSB in the $k_{SSB}$ is indicated by $a_{A+5}$ in the PBCH information bits. For the FR2, the $k_{SSB}$ includes 4 bits, which are indicated by the subcarrier offset of the SSB in the MIB. For the unlicensed spectrum in the FR1, when a value indicated by the $k_{SSB}$ is less than 24, the LSB in the $k_{SSB}$ further indicates QCL assumption indication information Q.

For ease of understanding "SIB1 PDCCH configuration" information field, the transmission of the SIB1 will be firstly described below.

In some communication systems (e.g., the NR system), a resource set for transmitting the PDCCH is referred to as a control-resource set (CORESET). A CORESET may include $N_{RB}$ resource blocks (RBs) in the frequency domain, and $N_{symb}$ symbols in the time domain. $N_{RB}$ and $N_{symb}$ are configured by the network device. A CORESET may be associated with one or more search space (SS) sets. A search space set includes one or more control channel elements (CCEs), and the terminal device may monitor a PDCCH candidate on the CCE included in the search space set.

The network device configures a Type0-PDCCH common search space (CSS) set through the MIB information in the SSB. The PDCCH transmitted in the Type0-PDCCH CSS set is used for scheduling a physical downlink shared channel (PDSCH) carrying the SIB1, the search space set of the PDCCH is indicated by the pdcch-ConfigSIB1 information field in the MIB information, and the CRC of a downlink control information (DCI) format corresponding to the PDCCH is scrambled by a system information radio network temporary identity (SI-RNTI). The terminal device may monitor the PDCCH candidate at the corresponding Type0-PDCCH CSS monitoring occasion based on CORESET0 associated with the Type0-PDCCH CSS, thereby receiving the scheduling of the corresponding SIB1 message. Specifically, the pdcch-ConfigSIB1 information field includes 8 bits, the 4 LSBs among the 8 bits indicate the configuration of the Type0-PDCCH CSS, and the 4 MSBs among the 8 bits indicate the configuration of the CORESET0.

If the terminal device detects an SSB and determines that the SSB is not associated with CORESET information for determining the Type0-PDCCH CSS set, when the value indicted by the $k_{SSB}$ is greater than or equal to 24 and less than or equal to 29 for the FR1, or when the value indicted by the $k_{SSB}$ is greater than or equal to 12 and less than or equal to 13 for the FR2, the terminal device may determine a global synchronization channel number (GSCN) where another SSB recently associated with the CORESET information for the Type 0-PDCCH CSS set is located. If the terminal device detects the another SSB but determines that the another SSB also does not provide the CORESET information for determining the Type0-PDCCH CSS set, the terminal device may ignore the GSCN information provided by the another SSB.

It is to be noted that, for the FR1, when the value indicated by the $k_{SSB}$ is 31, or for the FR2, when the value indicated by the $k_{SSB}$ is 15, the terminal device may determine that there is no SSB associated with the CORESET information for the Type0-PDCCH CSS set within one GSCN range.

It is to be noted that, for the FR1, when the value indicated by the $k_{SSB}$ is 30, or for the FR2, when the value indicated by the $k_{SSB}$ is 14, the SIB1 PDCCH configuration is a reserved value.

It is to be noted that other system messages, other than the SIB1, are scheduled by the Type0A-PDCCH CSS set. In other words, the PDCCH transmitted in the Type0A-PDCCH CSS set is used for scheduling a PDSCH carrying other system messages except the SIB1. The CRC of the DCI format corresponding to the PDCCH transmitted in the Type0A-PDCCH CSS set is also scrambled by the SI-RNTI.

The terminal device may also obtain a resource configuration of a physical random access channel (PRACH) transmission occasion (RO) in the random access procedure based on the received system message SIB1 of the cell. The terminal device may request the network device to transmit the system message based on the RO resource configured by the network device. The system message requested by the terminal device from the network device may be other system messages, other than the SIB1, such as one or more of: SIB2, SIB3, SIB4, SIB5, SIB6, SIB7, SIB8, SIB9, SIB10, SIB11, SIB12, SIB13, SIB14, SIB15, SIB16, SIB17, SIB18, SIB19, SIB20, and SIB21.

Network energy saving

Network energy saving is of great significance to an environmental sustainability, reduction of an impact on the environment (reduction of greenhouse gas emissions), and saving operational expenditure. With the increasing popularity of the communication systems (e.g., the 5G system) in various industrial and geographical regions, the communication systems need to support very high data transmission rates to handle more advanced services and applications (e.g., an extended reality (XR)). This leads to network deployments with the following characteristics: denser deployment, use of more antennas, larger bandwidth and more frequency bands. Considering the impact of the communication systems on the environment, it is necessary to develop controlled and new solutions to enhance the network energy saving.

An energy consumption has become a key part of an operator's operational expenditure (OPEX). In a report of the global system for mobile communications association (GSMA), an energy expenditure of a mobile network accounts for approximately 23% of the total operational expenditure. Most of the energy consumption comes from the radio access network, and more specifically from an active antenna unit (AAU). A data center and an optical fiber transmission account for a smaller share. A power consumption of the radio access for one time may be divided into a dynamic portion and a static portion. The dynamic portion may include only power consumption when data is being transmitted or received. The static portion may include power consumption necessary to maintain an essential operation of the radio access device at all times. For example, the static portion may include power consumption when no data is transmitted or received.

To sum up, based on the above purposes, it is necessary to study and develop a network energy consumption model, a key performance indicator (KPI), an evaluation method, etc. at the network device side, to determine and study a network energy saving technology in a target deployment scenario. The already defined power consumption model at the terminal device side may be used as a reference. The study should focus on how to achieve more efficient dynamic operation and/or semi-static operation, as well as achieve finer-grained data transmission and/or reception adaptation by considering one or more network energy saving technologies applied to the time domain, frequency domain, spatial domain, and power domain, in conjunction with a potential feedback support of the terminal device, potential auxiliary information of the terminal device, and technologies such as information exchange or coordination between network interfaces.

It is worth noting that this study not only evaluates a potential network energy saving gain, but also needs to evaluate and balance an impact of the network energy saving enhancement on the network performance and user performance by observing KPIs, such as, a spectral efficiency, a capability, a user perceived throughput (UPT), a delay, a UE power consumption, a complexity, a handover performance, a call drop rate, an initial access performance, a service level agreement (SLA) security-related KPI, etc. For example, the study should avoid having a significant impact on the aforementioned KPIs.

In order to realize the network energy saving, one network layout method is that when the network is in the idle state, the network device does not transmit a common channel/signal such as the SSB or the SIB1.

FIG. 2 is a schematic flowchart of a method for wireless communication according to an embodiment of the present disclosure, and the method is used for solving the aforementioned problem. The method shown in FIG. 2 may be performed by a terminal device and a network device. The method shown in FIG. 2 may include operation S210 to operation S230.

In operation S210, the terminal device determines a first uplink resource in a first cell.

The method shown in FIG. 2 may further include operation S212.

In operation S212, the network device determines the first uplink resource in the first cell.

In operation S220, the terminal device transmits a first uplink channel/signal via the first uplink resource.

In operation S230, the network device detects the first uplink channel/signal via the first uplink resource.

It is to be understood that in operation S230, the network device may detect the first uplink channel/signal, i.e. the network device may receive the first uplink channel/signal. For example, in case that the terminal device transmits the first uplink channel/signal via the first uplink resource, the network device may detect the first uplink channel/signal via the first uplink resource. In operation S230, the network device may fail to detect the first uplink channel/signal, i.e., the network device may not receive the first uplink channel/signal. For example, in case that the terminal device has not transmitted the first uplink channel/signal via the first uplink resource, the network device is unable to detect the first uplink channel/signal via the first uplink resource, i.e., the network device is unable to receive the first uplink channel/signal.

The first uplink channel/signal is used for requesting transmission of a first system message.

In some embodiments, the first system message may indicate configuration information of the network. For example, the first system message may include a common channel/signal, such as the SSB and/or the SIB1.

In some embodiments, the first system message may be a system message that is not transmitted by the network device in some cases. For example, when the network is in the idle state, the network device may realize the network device energy saving by not transmitting the first system message.

In the present disclosure, when the terminal device needs the first system message (e.g., when the terminal device needs to access the network), the terminal device may determine the first uplink resource for transmitting the first uplink channel/signal, thereby transmitting the first uplink channel/signal to request the network device to transmit the first system message. The network device may also detect the first uplink channel/signal based on the first uplink resource, thereby transmitting the first system message. Therefore, based on the present disclosure, the first system message may be requested and transmitted at an appropriate time, thereby improving a communication efficiency and reducing an energy consumption.

The first uplink resource may be an uplink resource in a first cell. The first system message may be a system message from the first cell or a system message from a second cell. The first cell may be different from the second cell. That is to say, based on the present disclosure, it is possible to flexibly use an uplink resource in a certain cell to request a system message from that cell and/or a system message from another cell. For example, the first cell may be a primary cell (PCell) and the second cell may be a secondary cell (SCell). In this case, the terminal device may transmit the first uplink channel/signal via the uplink resource in the PCell, and the first uplink channel/signal may be used for requesting a system message from the PCell and/or a system message from the SCell. Alternatively, the first cell may be an SCell and the second cell may be a PCell. The terminal device may transmit the first uplink channel/signal via the uplink resource in the SCell, and the first uplink channel/signal may be used for requesting a system message from the PCell and/or a system message from the SCell.

As described above, the first system message may include a system message, such as the SSB and/or the SIB1. That is to say, the first system message may include the SSB; or the first system message may include the SIB1; or the first system message may include both the SSB and the SIB1. The present disclosure proposes corresponding solutions based on different types of messages included in the first system message. For example, the present disclosure may be applied to at least one of the following three cases. In a first case, the first uplink channel/signal is used for requesting the SSB. In a second case, the first uplink channel/signal is used for requesting the SIB1. In a third case, the first uplink channel/signal is used for requesting both the SSB and the SIB1.

As described above, in order to realize the network energy saving, the network device may not transmit the first system message. When the terminal device needs to access the network, the terminal device may transmit the first uplink channel/signal to the network device, to request the network device to transmit the first system message. The present disclosure proposes the following technical solutions regarding how to enable the terminal device to acquire time-frequency resource information of the network and determine the first uplink resource in the first cell, so as to transmit the first uplink channel/signal. For example, if the first system message includes a common channel or signal for the initial access, such as the SSB (or the PBCH), and the transmission of the first system message is requested by the terminal device, in order to enable the terminal device to determine a time-frequency resource in which the first uplink channel/signal should be transmitted, the present disclosure proposes the following solution. The network device may transmit a first downlink channel/signal to the terminal device in advance, and the first downlink channel/signal is used by the terminal device to acquire information about at least part of the system time-domain resources and frequency-domain resources, and to determine the first uplink resource in the first cell, so that the terminal device is able to complete the transmission of the first uplink channel/signal. For another example, if the first system message includes the SSB1 and does not include the SSB, and serving cell configuration information, such as the SIB1 message, is requested based on a requirement of the terminal device, the present disclosure proposes the following solution. The first downlink channel/signal transmitted by the network device to the terminal device in advance may be the SSB, and the SSB is used by the terminal device to acquire information about at least part of the system time-domain resources and frequency-domain resources, and to determine the first uplink resource in the first cell, so that the terminal device is able to complete the transmission of the first uplink channel/signal. In addition, when the network device detects the first uplink channel/signal transmitted by the terminal device, the network device may transmit a second downlink channel/signal to the terminal device, and the second downlink channel/signal includes the first system message requested by the terminal device.

It is to be understood that in the present disclosure, the first uplink channel/signal includes: a first uplink physical channel and/or a first uplink reference signal. For example, the first uplink channel/signal includes a physical uplink control channel (PUCCH). For another example, the first uplink channel/signal includes a PRACH. The first downlink channel/signal includes: a first downlink physical channel and/or a first downlink reference signal. The second downlink channel/signal includes: a second downlink physical channel and/or a second downlink reference signal.

In some embodiments of the present disclosure, spatial filter information associated with the downlink resource may refer to spatial filter information associated with a downlink channel/signal transmitted in the downlink resource. Spatial filter information associated with the uplink resource may refer to: spatial filter information associated with an uplink channel/signal transmitted in the uplink resource; or spatial filter information associated with a downlink resource that is associated with the uplink resource.

In some embodiments of the present disclosure, the spatial filter information associated with the downlink resource may refer to: spatial filter information associated with a downlink channel/signal transmitted in the downlink resource; or spatial filter information associated with an uplink resource that is associated with the downlink resource. The spatial filter information associated with the uplink resource may refer to spatial filter information associated with the uplink channel/signal transmitted in the uplink resource.

Hereinafter, the solutions in the present disclosure will be described through a first embodiment and a second embodiment.

First embodiment

The first embodiment may be applied to at least one of the first case, the second case, or the third case. In the first embodiment, the first uplink channel/signal is used for requesting the SSB, or the first uplink channel/signal is used for requesting the SIB1, or the first uplink channel/signal is used for requesting both the SSB and the SIB1. For example, when the network is in the idle state, the network device does not transmit the SSB, and the first uplink channel/signal is used for requesting the SSB. Alternatively, when the network is in the idle state, the network device transmits the SSB but does not transmit the SIB1, and the first uplink channel/signal is used for requesting the SIB1. Alternatively, when the network is in the idle state, the network device does not transmit the SSB or the SIB1, and the first uplink channel/signal is used for requesting both the SSB and the SIB1.

As an implementation, the first system message to be transmitted that is requested by the first uplink channel/signal at least includes: a primary system message. For example, the primary system message may be one or more of the MIB, the SSB, or the PBCH.

As another implementation, the first system message to be transmitted that is requested by the first uplink channel/signal includes: the SIB1.

It is to be noted that the present disclosure may be applied to a frequency division duplex (FDD) communication mode or a time division duplex (TDD) communication mode, which is not limited in the present disclosure. For example, the uplink resource and the downlink resource in the first cell may be an FDD spectrum resource or a TDD spectrum resource. Alternatively, the uplink resource and the downlink resource in the second cell may also be the FDD spectrum resource or the TDD spectrum resource.

In some implementations, the terminal device or the network device may determine the first uplink resource based on the first downlink resource. The first downlink resource may be a downlink resource in the first cell or a downlink resource in a second cell. For example, the terminal device may determine the first uplink resource in the first cell based on the first downlink resource in the first cell; or, the terminal device determines the first uplink resource in the first cell based on the first downlink resource in the second cell.

In some embodiments, the first uplink resource may be determined based on the first downlink channel/signal received or transmitted in the first downlink resource. For example, the terminal device may determine the first uplink resource in the first cell based on the first downlink channel/signal received in the first downlink resource. For another example, the network device may determine the first uplink resource in the first cell based on the first downlink channel/signal transmitted in the first downlink resource.

The terminal device may acquire, based on the first downlink channel/signal, information about at least part of the system time-domain resources and/or frequency-domain resources, thereby determining the first uplink resource, so that the terminal device is able to complete the transmission of the first uplink channel/signal.

Optionally, the first downlink channel/signal includes one or more synchronization signals. For example, the first downlink channel/signal may include a primary synchronization signal (PSS) and/or a secondary synchronization signal (SSS).

In some embodiments, a relationship between the first downlink resource and the first uplink resource is predefined; or the relationship between the first downlink resource and the first uplink resource is preconfigured.

In some embodiments, the relationship between the first downlink resource and the first uplink resource satisfies one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

For example, a first resource interval between the first downlink resource and the first uplink resource may be preconfigured or predefined. The first resource interval may be an interval in the time domain or an interval in the frequency domain. The time-domain resource is taken as an example, and the first resource interval may be represented by a time-domain unit. For example, the first resource interval may include N time-domain units. Herein, N may be an integer or 0. N may be predefined or preconfigured. The time-domain unit may be a symbol, a slot, a half frame or a radio frame.

Exemplarily, if the N time-domain units are equal to 5 slots, a slot interval between a slot where the first downlink resource is located and a slot where the first uplink resource is located may be 5 slots.

Exemplarily, if the N time-domain units are equal to T radio frames, and T is a positive integer, there is an interval of T radio frames between a radio frame where the first downlink resource is located and a radio frame where the first uplink resource is located. The radio frame has a length of 10 milliseconds. For example, if the first downlink resource is a resource in the radio frame n, the first uplink resource is a resource in the radio frame n+T. Optionally, a position of the slot containing the first downlink resource in the radio frame is the same as a position of the slot containing the first uplink resource in the radio frame. For example, in the foregoing example, the first downlink resource is a resource in slot 0 in the radio frame n, and the first uplink resource is a resource in slot 0 in the radio frame n+T.

Exemplarily, if the N time-domain units are equal to T half frames, and T is a positive integer, there is an interval of T half frames between a half frame where the first downlink resource is located and a half frame where the first uplink resource is located. The half frame has a length of 5 milliseconds. For example, if T has a value of 3 and the first downlink resource is a resource in the first half frame of the radio frame n, the first uplink resource is a resource in the last half frame of the radio frame n+1. Optionally, a position of the slot containing the first downlink resource in the half frame is the same as a position of the slot containing the first uplink resource in the half frame. For example, in the foregoing example, it is assumed that a radio frame includes 10 slots, the first half frame includes slot 0 to slot 4, and the last half frame includes slot 5 to slot 9. If the first downlink resource is a resource in the slot 0 in the radio frame n, the first uplink resource is a resource in the slot 5 in the radio frame n+1.

Exemplarily, if the N time-domain units are equal to 0 radio frame or 1 half frame, there is no interval between the half frame where the first downlink resource is located and the half frame where the first uplink resource is located, i.e., the two half frames are adjacent to each other. It is to be noted that the two half frames may belong to the same radio frame or may belong to different radio frames (for example, adjacent radio frames). Optionally, the position of the slot containing the first downlink resource in the half frame is the same as the position of the slot containing the first uplink resource in the half frame.

For another example, a size of the first downlink resource may be the same as a size of the first uplink resource. Herein, the size may include a size of the frequency-domain resource and/or a size of the time-domain resource. Exemplarily, in some embodiments (e.g., in the FDD spectrum), the size of the frequency-domain resource occupied by the first downlink resource is the same as the size of the frequency-domain resource occupied by the first uplink resource.

For another example, the resource occupied by the first downlink resource may be the same as the resource occupied by the first uplink resource. The occupied resource may include an occupied frequency-domain resource and/or an occupied time-domain resource. Exemplarily, in some embodiments (e.g., in the TDD spectrum), the frequency-domain resource occupied by the first downlink resource is the same as the frequency-domain resource occupied by the first uplink resource.

For another example, a subcarrier spacing used for transmitting the first downlink channel/signal in the first downlink resource may be the same as a subcarrier spacing used for transmitting the first uplink channel/signal in the first uplink resource.

For another example, the spatial filter information associated with the first downlink resource may be the same as the spatial filter information associated with the first uplink resource.

In some embodiments, after receiving the first downlink channel/signal in the first downlink resource, the terminal device may determine the first uplink resource in the first cell based on the relationship between the first downlink resource and the first uplink resource, and transmit the first uplink channel/signal via the first uplink resource. The first uplink channel/signal is used for requesting the transmission of the first system message, e.g., the SSB, from the first cell or the second cell.

It is to be noted that, a configuration cell that pre-configures the relationship between the first downlink resource and the first uplink resource is not limited in the present disclosure. For example, the configuration cell may be the first cell and/or the second cell.

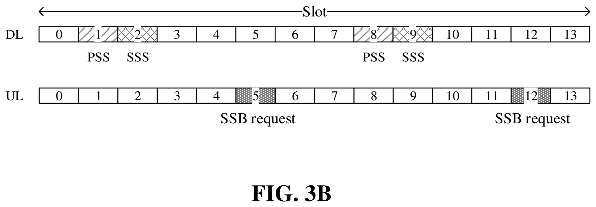

FIG. 3A and FIG. 3B illustrate examples of the first downlink channel/signal including the PSS and the SSS. The interval between the first uplink resource and the first downlink resource may be predefined or preconfigured 2 symbols. As shown in FIG. 3A or FIG. 3B, one slot includes two first downlink resources for transmitting the PSS and the SSS and two first uplink resources for requesting the transmission of the SSB. The first uplink channel/signal for requesting the transmission of the SSB includes 1 symbol. As shown in FIG. 3A or FIG. 3B, the first one of the first downlink resources for transmitting the PSS and the SSS is located in symbol 1 and symbol 2 in the slot. The first uplink resource corresponding to the first one of the first downlink resources is located in symbol 5, which is separated from the symbol 2 by two symbols in the slot. The second one of the first downlink resources for transmitting the PSS and the SSS is located in symbol 8 and symbol 9 in the slot. The first uplink resource corresponding to the second one of the first downlink resources is located in symbol 12, which is separated from the symbol 9 by two symbols in the slot.

As described above, the method provided in the present disclosure may be applied to the TDD spectrum or the FDD spectrum. For example, FIG. 3A may be applied to the TDD spectrum and FIG. 3B may be applied to the FDD spectrum.

In some embodiments, the terminal device may receive the first system message via a second downlink resource. In other words, the network device may transmit the first system message via the second downlink resource. For example, if the network device receives the first uplink channel/signal in the first uplink resource, the network device may transmit the first system message via the second downlink resource.

It is to be noted that the second downlink resource may include a downlink resource in the first cell and/or a downlink resource in the second cell. For example, the second downlink resource may be a downlink resource in the first cell or a downlink resource in the second cell.

It is to be noted that the first downlink resource and the second downlink resource may be downlink resources in the same cell; or the first downlink resource and the second downlink resource may be downlink resources in different cells. That is to say, in case that the first downlink resource belongs to the first cell, the second downlink resource may be a downlink resource in the first cell or a downlink resource in the second cell.

In some embodiments, the cell to which the second downlink resource belongs may be the same as or different from the cell to which the first system message belongs. For example, the network device may transmit the first system message of the first cell via the second downlink resource in the first cell, and the terminal device may receive the first system message of the first cell via the second downlink resource in the first cell; or the network device may transmit the first system message of the first cell via the second downlink resource in the second cell, and the terminal device may receive the first system message of the first cell via the second downlink resource in the second cell; or the network device may transmit the first system message of the second cell via the second downlink resource in the first cell, and the terminal device may receive the first system message of the second cell via the second downlink resource in the first cell; or the network device may transmit the first system message of the second cell via the second downlink resource in the second cell, and the terminal device may receive the first system message of the second cell via the second downlink resource in the second cell.

In some embodiments, a relationship between the first downlink resource and the second downlink resource is predefined; or the relationship between the first downlink resource and the second downlink resource is preconfigured.

As an implementation, the relationship between the first downlink resource and the second downlink resource may satisfy one or more of: a relationship between a time-domain resource occupied by the first downlink resource and a time-domain resource occupied by the second downlink resource is preconfigured or predefined; a relationship between a frequency-domain resource occupied by the first downlink resource and a frequency-domain resource occupied by the second downlink resource is preconfigured or predefined; a relationship between spatial filter information associated with the first downlink resource and spatial filter information associated with the second downlink resource is preconfigured or predefined; or a relationship between a subcarrier spacing associated with the first downlink resource and a subcarrier spacing associated with the second downlink resource is preconfigured or predefined.

For example, a second resource interval between the second downlink resource and the first downlink resource may be preconfigured or predefined. The second resource interval may be an interval in the time domain or an interval in the frequency domain. The time-domain resource is taken as an example, and the second resource interval may be represented by a time-domain unit. For example, the second resource interval may include M time-domain units. Herein, M may be an integer or 0. M may be predefined or preconfigured. The time-domain unit may be a symbol, a slot, a half frame or a radio frame.

Exemplarily, if the M time-domain units are equal to 5 slots, a slot interval between the slot where the first downlink resource is located and a slot where the second downlink resource is located may be 5 slots.

Exemplarily, if the M time-domain units are equal to K radio frames and K is a positive integer, there is an interval of K radio frames between the radio frame where the first downlink resource is located and a radio frame where the second downlink resource is located. The radio frame has a length of 10 milliseconds. For example, if the first downlink resource is a resource in the radio frame n, the second downlink resource is a resource in the radio frame n+K. Optionally, a position of the slot containing the first downlink resource in the radio frame is the same as a position of the slot containing the second downlink resource in the radio frame. For example, in the foregoing example, the first downlink resource is a resource in slot 0 in the radio frame n, and the second downlink resource is a resource in slot 0 in the radio frame n+K.

Exemplarily, if the M time-domain units are equal to K half frames and K is a positive integer, there is an interval of K half frames between the half frame where the first downlink resource is located and a half frame where the second downlink resource is located. The half frame has a length of 5 milliseconds. For example, if K has a value of 3 and the first downlink resource is a resource in the first half frame of the radio frame n, the second downlink resource is a resource in the last half frame of the radio frame n+1. Optionally, a position of the slot containing the first downlink resource in the half frame is the same as a position of the slot containing the second downlink resource in the half frame. For example, in the foregoing example, it is assumed that one radio frame includes 10 slots, the first half frame includes the slot 0 to the slot 4, and the last half frame includes the slot 5 to the slot 9. If the first downlink resource is a resource in the slot 0 in the radio frame n, the second downlink resource is a resource in the slot 5 in the radio frame n+1.

Exemplarily, if the M time-domain units are equal to 0 radio frame or 1 half frame, there is no interval between the half frame where the first downlink resource is located and the half frame where the second downlink resource is located, i.e., the two half frames are adjacent to each other. It is to be noted that the two half frames may belong to the same radio frame or may belong to different radio frames (for example, adjacent radio frames). Optionally, the position of the slot containing the first downlink resource in the half frame is the same as the position of the slot containing the second downlink resource in the half frame.

For another example, a size of the second downlink resource may be the same as a size of the first downlink resource. Herein, the size may include a size of the frequency-domain resource and/or a size of the time-domain resource. Exemplarily, in some embodiments (e.g., in the FDD spectrum), the size of the frequency-domain resource occupied by the second downlink resource is the same as the size of the frequency-domain resource occupied by the first downlink resource.

For another example, the resource occupied by the second downlink resource may be the same as the resource occupied by the first downlink resource. The occupied resource may include the occupied frequency-domain resource and/or the occupied time-domain resource. Exemplarily, in some embodiments (e.g., in the TDD spectrum), the frequency-domain resource occupied by the second downlink resource is the same as the frequency-domain resource occupied by the first downlink resource.

For another example, the subcarrier spacing associated with the second downlink resource may be the same as the subcarrier spacing associated with the first downlink resource.

For another example, the spatial filter information associated with the second downlink resource may be the same as the spatial filter information associated with the first downlink resource.

It is to be noted that, a configuration cell that pre-configures the relationship between the second downlink resource and the first downlink resource is not limited in the present disclosure. For example, the configuration cell may be the first cell and/or the second cell.

In some embodiments, a relationship between the first uplink resource and the second downlink resource is predefined; or the relationship between the first uplink resource and the second downlink resource is preconfigured.

As an implementation, the relationship between the first uplink resource and the second downlink resource may satisfy one or more of: a relationship between a time-domain resource occupied by the first uplink resource and a time-domain resource occupied by the second downlink resource is preconfigured or predefined; a relationship between a frequency-domain resource occupied by the first uplink resource and a frequency-domain resource occupied by the second downlink resource is preconfigured or predefined; a relationship between spatial filter information associated with the first uplink resource and spatial filter information associated with the second downlink resource is preconfigured or predefined; or a relationship between a subcarrier spacing associated with the first uplink resource and a subcarrier spacing associated with the second downlink resource is preconfigured or predefined.

For example, a third resource interval between the second downlink resource and the first uplink resource may be preconfigured or predefined. The third resource interval may be an interval in the time domain or an interval in the frequency domain. The time-domain resource is taken as an example, and the third resource interval may be represented by a time-domain unit. For example, the third resource interval may include P time-domain units. Herein, P may be an integer or 0. P may be predefined or preconfigured. The time-domain unit may be a symbol, a slot, a half frame or a radio frame.

Exemplarily, if the P time-domain units are equal to 5 slots, a slot interval between the slot where the first uplink resource is located and the slot where the second downlink resource is located may be 5 slots.

Exemplarily, if the P time-domain units are equal to L radio frames and L is a positive integer, there is an interval of L radio frames between the radio frame where the first uplink resource is located and the radio frame where the second downlink resource is located. The radio frame has a length of 10 milliseconds. For example, if the first uplink resource is a resource in the radio frame n, the second downlink resource is a resource in the radio frame n+L. Optionally, the position of the slot containing the first uplink resource in the radio frame is the same as the position of the slot containing the second downlink resource in the radio frame. For example, in the foregoing example, the first uplink resource is a resource in the slot 1 in the radio frame n, and the second downlink resource is a resource in the slot 1 in the radio frame n+L.

Exemplarily, if the P time-domain units are equal to L half frames and L is a positive integer, there is an interval of L half frames between the half frame where the first uplink resource is located and the half frame where the second downlink resource is located. The half frame has a length of 5 milliseconds. For example, if L has a value of 3 and the first uplink resource is a resource in the first half frame of the radio frame n, the second downlink resource is a resource in the last half frame of the radio frame n+1. Optionally, the position of the slot containing the first uplink resource in the half frame is the same as the position of the slot containing the second downlink resource in the half frame. For example, in the foregoing example, it is assumed that one radio frame includes 10 slots, the first half frame includes the slot 0 to the slot 4, and the last half frame includes the slot 5 to the slot 9. If the first uplink resource is a resource in the slot 1 in the radio frame n, the second downlink resource is a resource in the slot 6 in the radio frame n+1.

Exemplarily, if the P time-domain units are equal to 0 radio frame or 1 half frame, there is no interval between the half frame where the first uplink resource is located and the half frame where the second downlink resource is located, i.e., the two half frames are adjacent to each other. It is to be noted that the two half frames may belong to the same radio frame or may belong to different radio frames (for example, adjacent radio frames). Optionally, the position of the slot containing the first uplink resource in the half frame is the same as the position of the slot containing the second downlink resource in the half frame.

For another example, a size of the second downlink resource may be the same as a size of the first uplink resource. Herein, the size may include a size of the frequency-domain resource and/or a size of the time-domain resource. Exemplarily, in some embodiments (e.g., in the FDD spectrum), the size of the frequency-domain resource occupied by the second downlink resource is the same as the size of the frequency-domain resource occupied by the first uplink resource.

For another example, the resource occupied by the second downlink resource may be the same as the resource occupied by the first uplink resource. The occupied resource may include the occupied frequency-domain resource and/or the occupied time-domain resource. Exemplarily, in some embodiments (e.g., in the TDD spectrum), the frequency-domain resource occupied by the second downlink resource is the same as the frequency-domain resource occupied by the first uplink resource.

For another example, the subcarrier spacing associated with the second downlink resource may be the same as the subcarrier spacing associated with the first uplink resource.

For another example, the spatial filter information associated with the second downlink resource may be the same as the spatial filter information associated with the first uplink resource.

It is to be noted that, a configuration cell that pre-configures the relationship between the second downlink resource and the first uplink resource is not limited in the present disclosure. For example, the configuration cell may be the first cell and/or the second cell.

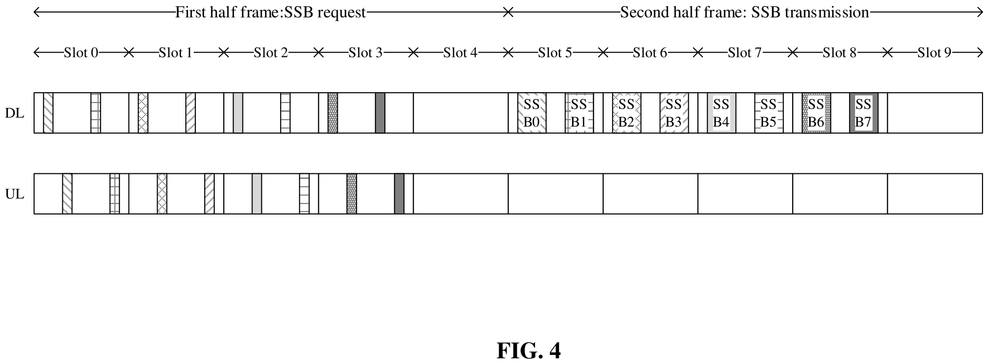

FIG. 4 is an example diagram of a second downlink resource according an embodiment of the present disclosure.

In the example shown in FIG. 4, the first downlink resource and/or the first uplink resource for requesting the transmission of the SSB in a period are(is) located within a first half frame (5 ms), and this half frame is either within the same radio frame as the second half frame where the SSB transmission is located or within an adjacent radio frame. For example, the first half frame where the first downlink resource and/or the first uplink resource are(is) located is adjacent to the second half frame where the second downlink resource for the transmission of the SSB is located, and the first half frame precedes the second half frame. The first half frame is the first half frame in the radio frame n, and the second half frame is the last half frame in the radio frame n. Alternatively, the first half frame is the last half frame in the radio frame n, and the second half frame is the first half frame in the radio frame n+1. For example, both the first half frame where the first downlink resource and/or the first uplink resource are(is) located and the second half frame where the second downlink resource for the transmission of the SSB is located belong to the radio frame n. The first half frame is the first half frame in the radio frame n, and the second half frame is the last half frame in the radio frame n. Alternatively, the second half frame is the first half frame in the radio frame n, and the first half frame is the last half frame in the radio frame n.

In some implementations, the number of first downlink resources and the number of first uplink resources for requesting the transmissions of the SSBs in a period are the same as the number of SSBs included in an SSB transmission occasion, and the PSS and SSS transmitted in the first downlink resource have a QCL relationship with the SSB transmitted in the second downlink resource corresponding to the first downlink resource. For example, with continued reference to FIG. 4, there is a QCL relationship between channels/signals transmitted in the time-domain resources denoted as the same pattern.

It is to be noted that FIG. 4 illustrates an example with the FDD spectrum and a subcarrier spacing of 15 kHz. The method provided in the present disclosure may also be applied to cases involving other spectrum types or other subcarrier spacings, which are not limited in the present disclosure. For example, the method illustrated in FIG. 4 may also be applied to the TDD spectrum. Alternatively, the method illustrated in FIG. 4 may also be applied to a scenario where the subcarrier spacing is 30 kHz.

In some embodiments, after the network device transmits the SSB via the second downlink resource, the network device may transmit the SIB1 message corresponding to the SSB.

For ease of understanding, a request and transmission procedure of the SSB will be described below with reference to FIG. 3B and FIG. 4. The slot illustrated in FIG. 3B may be the slot 1 in FIG. 4. As illustrated in FIG. 3B, when the terminal device receives the PSS and the SSS in the first one of the first downlink resources in slot 1 (i.e., the symbol 1 and the symbol 2 in the slot 1), the terminal device may transmit a request message (i.e., the first uplink channel/signal) for requesting the transmission of the SSB to the network device via the first one of the first uplink resources in the slot 1 (i.e., the symbol 5 in the slot 1). Accordingly, the network device may receive the request message transmitted by the terminal device in the symbol 5 in the slot 1. As illustrated in FIG. 4, after receiving the request message, the network device may transmit the SSB2 via the second downlink resource in the slot 6. Herein, the PSS and the SSS transmitted in the symbol 1 and the symbol 2 in the slot 1 have a QCL relationship with the SSB2 transmitted in the slot 6. Optionally, after the network device transmits the SSB2, the network device also transmits the SIB1 message associated with the SSB2.

Second embodiment

The second embodiment is an embodiment for the second case. In the second case, the first system message may be the SIB1, i.e. the first uplink channel/signal is used for requesting the SIB1. For example, the second embodiment may be applied to a scenario where the network device transmits the SSB but does not transmit the SIB1 in case that the network is in the idle state.

As an implementation, before the terminal device determines the first uplink resource in the first cell, the terminal device may receive a first SSB via the first downlink resource. The first SSB may not be associated with the transmission of the SIB1.

It is to be noted that the first downlink resource may be a downlink resource in the first cell or a downlink resource in the second cell. In other words, the first SSB received by the terminal device may be transmitted by the first cell or may be transmitted by the second cell. The terminal device may determine the first uplink resource for transmitting the first uplink channel/signal in the first cell based on the first SSB transmitted by the first cell or the second cell. The first uplink channel/signal is used for requesting the network device to transmit the SIB1 of the first cell or the SIB1 of the second cell.

In some implementations, the first SSB includes a first information field. When a value of the first information field is a first value, the first information field is used for determining that the first SSB is not associated with the transmission of the SIB1, or the first information field is used for determining that the terminal device may transmit the first uplink channel/signal via the first uplink resource.

It is to be understood that in a normal cell, the network device needs to transmit the SSB associated with the SIB1 in order to enable the terminal device to complete the initial access. If a characteristic that the network device transmits the SSB without transmitting the SIB1 is introduced into an energy-saving cell, the terminal device cannot distinguish whether the currently transmitted SSB is associated with the transmission of the SIB1 or not. Based on this, in the present disclosure, whether the SSB is associated with the transmission of the SIB1 may be indicated through the first information field. On the other hand, if the terminal device needs to request the transmission of the SIB1, the terminal device may determine the first uplink transmission resource for the transmission of the first uplink channel/signal based on an SSB that is not associated with the transmission of the SIB1, thereby requesting the transmission of the SIB 1.

In some embodiments, the first information field may indicate a subcarrier offset of the first SSB, i.e. the first information field may include the $k_{SSB}$. When a frequency band to which the first downlink resource belongs is the FR1, the first value is 30 or 31; or when a frequency band to which the first downlink resource belongs is the FR2, the first value is 14 or 15. That is to say, when the frequency band to which the first downlink resource belongs is the FR1 and the value of the $k_{SSB}$ in the first SSB is 30 or 31, the first SSB is not associated with the transmission of the SIB1. Alternatively, when the frequency band to which the first downlink resource belongs is the FR2 and the value of the $k_{SSB}$ in the first SSB is 14 or 15, the first SSB is not associated with the transmission of the SIB 1.

For example, when the frequency band to which the first downlink resource belongs is the FR1 and the value indicated by the $k_{SSB}$ is 30 or 31, it is indicated that the network device transmits the SSB but does not transmit the SIB1, and/or the terminal device may transmit the first uplink channel/signal via the first uplink resource, and the first uplink channel/signal is used for requesting the transmission of the SIB 1.

For another example, when the frequency band to which the first downlink resource belongs is the FR2 and the value indicated by the $k_{SSB}$ is 14 or 15, it is indicated that the network device transmits the SSB but does not transmit the SIB1, and/or the terminal device may transmit the first uplink channel/signal via the first uplink resource, and the first uplink channel/signal is used for requesting the transmission of the SIB1.

As described above, in the related art, when the frequency band to which the first downlink resource belongs is the FR1 and the value indicated by the $k_{SSB}$ is 30 or 31, or when the frequency band to which the first downlink resource belongs is the FR2 and the value indicated by the $k_{SSB}$ is 14 or 15, the SIB1 PDCCH configuration is a reserved value or there is no SSB associated with the CORESET information for the Type0-PDCCH CSS set within a GSCN range. In the present disclosure, $k_{SSB}$ having the aforementioned values is reused as the first information field, which can avoid adding a new information field and thus can reduce an implementation complexity.

In some embodiments, one or more of the following information fields (hereinafter referred to as a target information field) in the first SSB have preset values: a common subcarrier spacing, a TypeA DMRS position, an SIB1 PDCCH configuration, a cell barred, an intra frequency reselection, or a spare bit.

When the first SSB is not associated with the transmission of the SIB1, the target information field may be reused as the first information field, which can avoid adding a new information field and thus can reduce an implementation complexity.

In some implementations, when the target information field in the first SSB is set to the preset value, the first SSB is not associated with the transmission of the SIB1. Alternatively, when the target information field is set to the preset value, it may be determined that the network device transmits the SSB but does not transmit the SIB1, and/or the terminal device may transmit the first uplink channel/signal via the first uplink resource.

The aforementioned embodiments may be implemented individually or in combination. For example, in case that the target information field is the preset value and the value indicated by the $k_{SSB}$ is 31 for the FR1 or the value indicated by the $k_{SSB}$ is 15 for the FR2, the first SSB is not associated with the transmission of the SIB or the first information field is used for determining that the terminal device may transmit the first uplink channel/signal via the first uplink resource.

In some embodiments, the first SSB may be used for determining the first uplink resource. For example, the terminal device may determine the first uplink resource based on the first SSB received in the first downlink resource.

It is to be understood, since the first SSB is not associated with the transmission of the SIB1, the network device may transmit the first SSB but does not transmit the SIB1. After receiving the first SSB, the terminal device may determine the first uplink resource through the first SSB, and transmit the first uplink channel/signal via the first uplink resource to request the transmission of the SIB1.

As a possible implementation, a second information field in the first SSB is used for determining or indicating a time-domain position and/or a frequency-domain position of the first uplink resource.

Optionally, the terminal device may determine information about the first uplink resource based on the second information field. Furthermore, the terminal device may determine information about the time-domain resource and/or the frequency-domain resource of the first uplink resource based on the information about the first uplink resource. The information about the first uplink resource may include one or more of: candidate resource information of the first uplink resource, information about the frequency-domain resource of the first uplink resource, and information about the time-domain resource of the first uplink resource.

Optionally, the terminal device may directly determine the time-domain resource and/or the frequency-domain resource of the first uplink resource based on the second information field.

After determining the time-domain resource and/or the frequency-domain resource of the first uplink resource, the terminal device may transmit the first uplink channel/signal in the first uplink resource to request the network device to transmit the SIB1 message.

In some embodiments, the second information field may include a SIB1 PDCCH configuration information field. The SIB1 PDCCH configuration information field is used for determining the Type0-PDCCH CSS set. Herein, the time-domain position of the first uplink resource may be determined based on a time-domain position where the Type0-PDCCH CSS set is located, in which the Type0-PDCCH CSS set is determined by the SIB1 PDCCH configuration information field in the first SSB, and/or the frequency-domain position of the first uplink resource may be determined based on a frequency-domain position where the Type0-PDCCH CSS set is located, in which the Type0-PDCCH CSS set is determined by the SIB1 PDCCH configuration information field in the first SSB. It is to be noted that in case that the first SSB is not associated with the transmission of the SIB1, the SIB1 PDCCH configuration information field may indicate the time-domain position and/or the frequency-domain position of the first uplink resource.

Exemplarily, a relationship between the first uplink resource and the Type0-PDCCH CSS set may satisfy one or more of: the time-domain position of the first uplink resource includes a first symbol of the time-domain position where at least one Type0-PDCCH CSS set is located; the time-domain position of the first uplink resource includes a last symbol of the time-domain position where at least one Type0-PDCCH CSS set is located; the frequency-domain position of the first uplink resource is the same as the frequency-domain position where the Type0-PDCCH CSS set is located; or a size of a frequency-domain resource for the first uplink resource is the same as a size of a frequency-domain resource for the Type0-PDCCH CSS set.

As a possible implementation, the first uplink resource may be determined based on the first downlink resource; or the first uplink resource may be determined based on a relationship between the first downlink resource and the first uplink resource.

In some embodiments, the relationship between the first downlink resource and the first uplink resource is predefined; or the relationship between the first downlink resource and the first uplink resource is preconfigured.

In some embodiments, the relationship between the first downlink resource and the first uplink resource satisfies one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

For example, a first resource interval between the first downlink resource and the first uplink resource may be preconfigured or predefined. The first resource interval may be an interval in the time domain or an interval in the frequency domain. The time-domain resource is taken as an example, and the first resource interval may be represented by a time-domain unit. For example, the first resource interval may include N time-domain units. Herein, N may be an integer or 0. N may be predefined or preconfigured. The time-domain unit may be a symbol, a slot, a half frame or a radio frame.

Exemplarily, if the N time-domain units are equal to 5 slots, a slot interval between a slot where the first downlink resource is located and a slot where the first uplink resource is located may be 5 slots.

Exemplarily, if the N time-domain units are equal to T radio frames, and T is a positive integer, there is an interval of T radio frames between a radio frame where the first downlink resource is located and a radio frame where the first uplink resource is located. The radio frame has a length of 10 milliseconds. For example, if the first downlink resource is a resource in the radio frame n, the first uplink resource is a resource in the radio frame n+T. Optionally, a position of the slot containing the first downlink resource in the radio frame is the same as a position of the slot containing the first uplink resource in the radio frame. For example, in the foregoing example, the first downlink resource is a resource in slot 0 in the radio frame n, and the first uplink resource is a resource in slot 0 in the radio frame n+T.

Exemplarily, if the N time-domain units are equal to T half frames, and T is a positive integer, there is an interval of T half frames between a half frame where the first downlink resource is located and a half frame where the first uplink resource is located. The half frame has a length of 5 milliseconds. For example, if T has a value of 3 and the first downlink resource is a resource in the first half frame of the radio frame n, the first uplink resource is a resource in the last half frame of the radio frame n+1. Optionally, a position of the slot containing the first downlink resource in the half frame is the same as a position of the slot containing the first uplink resource in the half frame. For example, in the foregoing example, it is assumed that a radio frame includes 10 slots, the first half frame includes slot 0 to slot 4, and the last half frame includes slot 5 to slot 9. If the first downlink resource is a resource in the slot 0 in the radio frame n, the first uplink resource is a resource in the slot 5 in the radio frame n+1.

Exemplarily, if the N time-domain units are equal to 0 radio frame or 1 half frame, there is no interval between the half frame where the first downlink resource is located and the half frame where the first uplink resource is located, i.e., the two half frames are adjacent to each other. It is to be noted that the two half frames may belong to the same radio frame or may belong to different radio frames (for example, adjacent radio frames). Optionally, the position of the slot containing the first downlink resource in the half frame is the same as the position of the slot containing the first uplink resource in the half frame.

For another example, a size of the first downlink resource may be the same as a size of the first uplink resource. Herein, the size may include a size of the frequency-domain resource and/or a size of the time-domain resource. Exemplarily, in some embodiments (e.g., in the FDD spectrum), the size of the frequency-domain resource occupied by the first downlink resource is the same as the size of the frequency-domain resource occupied by the first uplink resource.

For another example, the resource occupied by the first downlink resource may be the same as the resource occupied by the first uplink resource. The occupied resource may include an occupied frequency-domain resource and/or an occupied time-domain resource. Exemplarily, in some embodiments (e.g., in the TDD spectrum), the frequency-domain resource occupied by the first downlink resource is the same as the frequency-domain resource occupied by the first uplink resource.

For another example, a subcarrier spacing used for transmitting the first SSB in the first downlink resource may be the same as a subcarrier spacing used for transmitting the first uplink channel/signal in the first uplink resource.

For another example, the spatial filter information associated with the first downlink resource may be the same as the spatial filter information associated with the first uplink resource.

In some embodiments, after receiving the first SSB in the first downlink resource, the terminal device determines the first uplink resource in the first cell based on the relationship, and transmits the first uplink channel/signal via the first uplink resource. The first uplink channel/signal is used for requesting the transmission of the SIB1 from the first cell.

It is to be noted that, a configuration cell that pre-configures the relationship between the second downlink resource and the first uplink resource is not limited in the present disclosure. For example, the configuration cell may be the first cell and/or the second cell.

Optionally, the terminal device may receive a second SSB via a second downlink resource, where the second SSB is associated with the SIB1. That is to say, if the network device receives the request for transmitting the SIB1, the network device may transmit the second SSB associated with the transmission of the SIB1 to the terminal device through the solution in the related art, thereby transmitting the SIB1.

It is to be noted that the second downlink resource may include a downlink resource in the first cell and/or a downlink resource in the second cell. For example, the second downlink resource may be a downlink resource in the first cell or a downlink resource in the second cell.

It is to be noted that the first downlink resource and the second downlink resource may be downlink resources in the same cell; or the first downlink resource and the second downlink resource may be downlink resources in different cells.

In some embodiments, a relationship between the first downlink resource and the second downlink resource is predefined; or the relationship between the first downlink resource and the second downlink resource is preconfigured.

As an implementation, the relationship between the first downlink resource and the second downlink resource may satisfy one or more of: a relationship between a time-domain resource occupied by the first downlink resource and a time-domain resource occupied by the second downlink resource is preconfigured or predefined; a relationship between a frequency-domain resource occupied by the first downlink resource and a frequency-domain resource occupied by the second downlink resource is preconfigured or predefined; a relationship between spatial filter information associated with the first downlink resource and spatial filter information associated with the second downlink resource is preconfigured or predefined; or a relationship between a subcarrier spacing associated with the first downlink resource and a subcarrier spacing associated with the second downlink resource is preconfigured or predefined.

For example, a second resource interval between the second downlink resource and the first downlink resource may be preconfigured or predefined. The second resource interval may be an interval in the time domain or an interval in the frequency domain. The time-domain resource is taken as an example, and the second resource interval may be represented by a time-domain unit. For example, the second resource interval may include M time-domain units. Herein, M may be an integer or 0. M may be predefined or preconfigured. The time-domain unit may be a symbol, a slot, a half frame or a radio frame.

Exemplarily, if the M time-domain units are equal to 5 slots, a slot interval between the slot where the first downlink resource is located and a slot where the second downlink resource is located may be 5 slots.

Exemplarily, if the M time-domain units are equal to K radio frames and K is a positive integer, there is an interval of K radio frames between the radio frame where the first downlink resource is located and a radio frame where the second downlink resource is located. The radio frame has a length of 10 milliseconds. For example, if the first downlink resource is a resource in the radio frame n, the second downlink resource is a resource in the radio frame n+K. Optionally, a position of the slot containing the first downlink resource in the radio frame is the same as a position of the slot containing the second downlink resource in the radio frame. For example, in the foregoing example, the first downlink resource is a resource in slot 0 in the radio frame n, and the second downlink resource is a resource in slot 0 in the radio frame n+K.

Exemplarily, if the M time-domain units are equal to K half frames and K is a positive integer, there is an interval of K half frames between the half frame where the first downlink resource is located and a half frame where the second downlink resource is located. The half frame has a length of 5 milliseconds. For example, if K has a value of 3 and the first downlink resource is a resource in the first half frame of the radio frame n, the second downlink resource is a resource in the last half frame of the radio frame n+1. Optionally, a position of the slot containing the first downlink resource in the half frame is the same as a position of the slot containing the second downlink resource in the half frame. For example, in the foregoing example, it is assumed that one radio frame includes 10 slots, the first half frame includes the slot 0 to the slot 4, and the last half frame includes the slot 5 to the slot 9. If the first downlink resource is a resource in the slot 0 in the radio frame n, the second downlink resource is a resource in the slot 5 in the radio frame n+1.

Exemplarily, if the M time-domain units are equal to 0 radio frame or 1 half frame, there is no interval between the half frame where the first downlink resource is located and the half frame where the second downlink resource is located, i.e., the two half frames are adjacent to each other. It is to be noted that the two half frames may belong to the same radio frame or may belong to different radio frames (for example, adjacent radio frames). Optionally, the position of the slot containing the first downlink resource in the half frame is the same as the position of the slot containing the second downlink resource in the half frame.

For another example, a size of the second downlink resource may be the same as a size of the first downlink resource. Herein, the size may include a size of the frequency-domain resource and/or a size of the time-domain resource. Exemplarily, in some embodiments (e.g., in the FDD spectrum), the size of the frequency-domain resource occupied by the second downlink resource is the same as the size of the frequency-domain resource occupied by the first downlink resource.

For another example, the resource occupied by the second downlink resource may be the same as the resource occupied by the first downlink resource. The occupied resource may include the occupied frequency-domain resource and/or the occupied time-domain resource. Exemplarily, in some embodiments (e.g., in the TDD spectrum), the frequency-domain resource occupied by the second downlink resource is the same as the frequency-domain resource occupied by the first downlink resource.

For another example, the subcarrier spacing associated with the second downlink resource may be the same as the subcarrier spacing associated with the first downlink resource.

For another example, the spatial filter information associated with the second downlink resource may be the same as the spatial filter information associated with the first downlink resource.

It is to be noted that, a configuration cell that pre-configures the relationship between the second downlink resource and the first downlink resource is not limited in the present disclosure. For example, the configuration cell may be the first cell and/or the second cell.

In some embodiments, a relationship between the first uplink resource and the second downlink resource is predefined; or the relationship between the first uplink resource and the second downlink resource is preconfigured.

As an implementation, the relationship between the first uplink resource and the second downlink resource may satisfy one or more of: a relationship between a time-domain resource occupied by the first uplink resource and a time-domain resource occupied by the second downlink resource is preconfigured or predefined; a relationship between a frequency-domain resource occupied by the first uplink resource and a frequency-domain resource occupied by the second downlink resource is preconfigured or predefined; a relationship between spatial filter information associated with the first uplink resource and spatial filter information associated with the second downlink resource is preconfigured or predefined; or a relationship between a subcarrier spacing associated with the first uplink resource and a subcarrier spacing associated with the second downlink resource is preconfigured or predefined.

For example, a third resource interval between the second downlink resource and the first uplink resource may be preconfigured or predefined. The third resource interval may be an interval in the time domain or an interval in the frequency domain. The time-domain resource is taken as an example, and the second resource interval may be represented by a time-domain unit. For example, the third resource interval may include P time-domain units. Herein, P may be an integer or 0. P may be predefined or preconfigured. The time-domain unit may be a symbol, a slot, a half frame or a radio frame.

Exemplarily, if the P time-domain units are equal to 5 slots, a slot interval between the slot where the first uplink resource is located and the slot where the second downlink resource is located may be 5 slots.

Exemplarily, if the P time-domain units are equal to L radio frames and L is a positive integer, there is an interval of L radio frames between the radio frame where the first uplink resource is located and the radio frame where the second downlink resource is located. The radio frame has a length of 10 milliseconds. For example, if the first uplink resource is a resource in the radio frame n, the second downlink resource is a resource in the radio frame n+L. Optionally, the position of the slot containing the first uplink resource in the radio frame is the same as the position of the slot containing the second downlink resource in the radio frame. For example, in the foregoing example, the first uplink resource is a resource in the slot 1 in the radio frame n, and the second downlink resource is a resource in the slot 1 in the radio frame n+L.

Exemplarily, if the P time-domain units are equal to L half frames and L is a positive integer, there is an interval of L half frames between the half frame where the first uplink resource is located and the half frame where the second downlink resource is located. The half frame has a length of 5 milliseconds. For example, if L has a value of 3 and the first uplink resource is a resource in the first half frame of the radio frame n, the second downlink resource is a resource in the last half frame of the radio frame n+1. Optionally, the position of the slot containing the first uplink resource in the half frame is the same as the position of the slot containing the second downlink resource in the half frame. For example, in the foregoing example, it is assumed that one radio frame includes 10 slots, the first half frame includes the slot 0 to the slot 4, and the last half frame includes the slot 5 to the slot 9. If the first uplink resource is a resource in the slot 1 in the radio frame n, the second downlink resource is a resource in the slot 6 in the radio frame n+1.

Exemplarily, if the P time-domain units are equal to 0 radio frame or 1 half frame, there is no interval between the half frame where the first uplink resource is located and the half frame where the second downlink resource is located, i.e., the two half frames are adjacent to each other. It is to be noted that the two half frames may belong to the same radio frame or may belong to different radio frames (for example, adjacent radio frames). Optionally, the position of the slot containing the first uplink resource in the half frame is the same as the position of the slot containing the second downlink resource in the half frame.

For another example, a size of the second downlink resource may be the same as a size of the first uplink resource. Herein, the size may include a size of the frequency-domain resource and/or a size of the time-domain resource. Exemplarily, in some embodiments (e.g., in the FDD spectrum), the size of the frequency-domain resource occupied by the second downlink resource is the same as the size of the frequency-domain resource occupied by the first uplink resource.

For another example, the resource occupied by the second downlink resource may be the same as the resource occupied by the first uplink resource. The occupied resource may include the occupied frequency-domain resource and/or the occupied time-domain resource. Exemplarily, in some embodiments (e.g., in the TDD spectrum), the frequency-domain resource occupied by the second downlink resource is the same as the frequency-domain resource occupied by the first uplink resource.

For another example, the subcarrier spacing associated with the second downlink resource may be the same as the subcarrier spacing associated with the first uplink resource.

For another example, the spatial filter information associated with the second downlink resource may be the same as the spatial filter information associated with the first uplink resource.

It is to be noted that, a configuration cell that pre-configures the relationship between the second downlink resource and the first uplink resource is not limited in the present disclosure. For example, the configuration cell may be the first cell and/or the second cell.

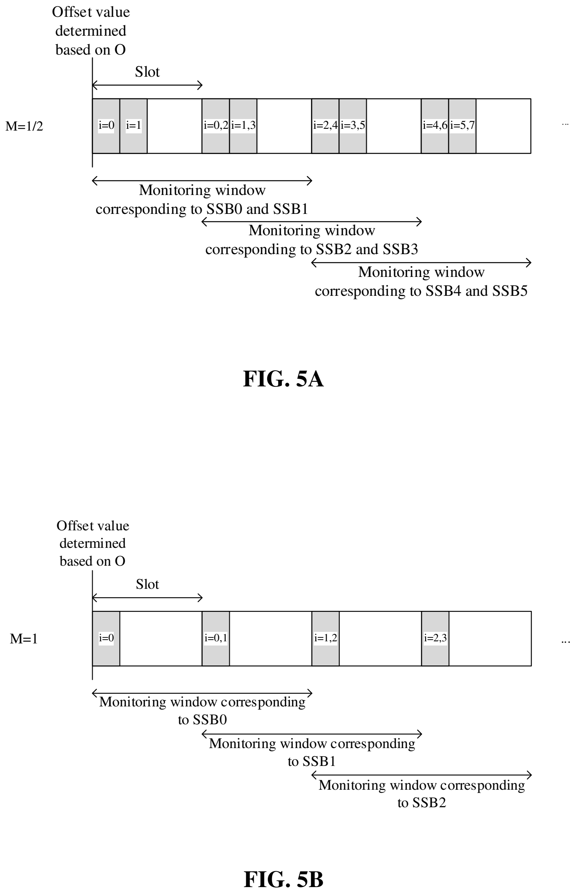

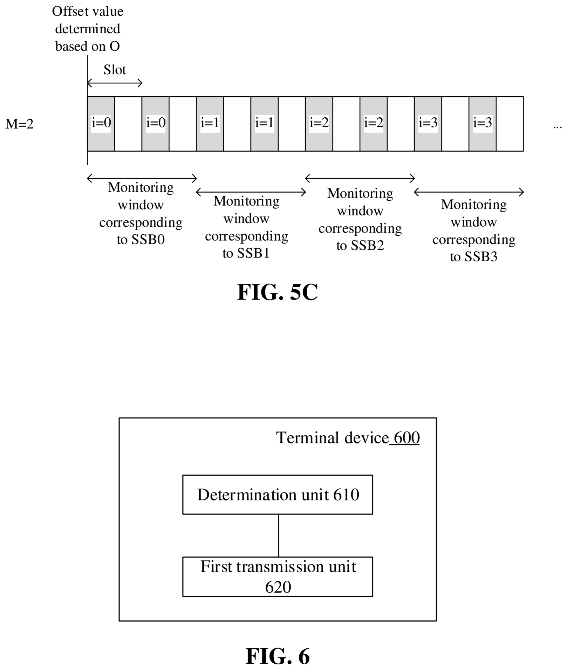

FIG. 5A to FIG. 5C illustrate examples of determining a time-domain position of a first uplink resource based on SIB1 PDCCH configuration information in the first SSB. It is to be understood that these examples are appliable to some embodiments (e.g., the TDD spectrum). The SIB1 PDCCH configuration information in the first SSB indicates a configuration of the Type0-PDCCH CSS, and the configuration of the Type0-PDCCH CSS includes: values of a parameter O and a parameter M (only for mode 1), an index of the first orthogonal frequency division multiplexing (OFDM) symbol in the search space, and the number of search spaces in each slot (only for the mode 1). For the mode 1, the SSB and CORESET 0 may be mapped onto different symbols, and a frequency range of the CORESET 0 is required to include the SSB. The Type0-PDCCH CSS of one SSB is in a monitoring window including two consecutive slots, and the period of the monitoring window is 20 ms. A mapping relationship between the index i of the SSB and the first slot in the corresponding monitoring window may be:

$$n_0 = \left(O \cdot 2^\mu + \lfloor i \cdot M \rfloor\right) \mathrm{mod} N_{\mathrm{slot}}^{\mathrm{frame},\mu}.$$

$n_0$ is an index of the first slot in the Type0-PDCCH CSS monitoring window in a radio frame, and the radio frame has a length of 10 ms. When $\left\lfloor \left(O \cdot 2^\mu + \lfloor i \cdot M \rfloor\right) / N_{\mathrm{slot}}^{\mathrm{frame},\mu} \right\rfloor \mathrm{mod} 2 = 0$, the first radio frame within 20ms is mapped; and when $\left\lfloor \left(O \cdot 2^\mu + \lfloor i \cdot M \rfloor\right) / N_{\mathrm{slot}}^{\mathrm{frame},\mu} \right\rfloor \mathrm{mod} 2 = 1$, the second radio frame within 20 ms is mapped.

$\mu$ represents the subcarrier spacing (SCS) configuration, and $N_{\mathrm{slot}}^{\mathrm{frame},\mu}$ represents the number of slots included in the radio frame when the SCS is configured as $\mu$.

The parameter M controls an overlap degree between the monitoring window for SSB i and the monitoring window for SSB i+1, including three cases: complete non-overlap (M=2), overlap of one slot (M=1), and complete overlap (M=1/2). The parameter O is used for controlling a starting position of the monitoring window for the first SSB, and is used for avoiding collision between the Type0-PDCCH CSS monitoring window and the SSB. For the FR1, the values of O may be {0, 2, 5, 7}, and for the FR2, the values of O may be {0, 2.5, 5, 7.5}. For example, when the SCS is 120 kHz, offset values corresponding to the O having the values of 0, 2.5, 5, and 7.5 are 0 slot, 20 slots, 40 slots, and 60 slots, respectively.

FIG. 5A to FIG. 5C show schematic diagrams of Type0-PDCCH CSS monitoring windows in three cases of M=1/2, M=1, and M=2, respectively. When M=1/2, the starting symbols of two search spaces in one slot may be configured as symbols {0, 7} or {0, $N_{\mathrm{symb}}$}; and when M=1 or M=2, the starting symbol of the search space in one slot is symbol 0. In FIG. 5A, when M=1/2, it is assumed that the starting symbols of two search spaces in one slot may be configured as symbols {0, $N_{\mathrm{symb}}$}.

When the Type0-PDCCH CSS set in the Type0-PDCCH CSS monitoring window shown in FIG. 5A to FIG. 5C is determined based on the SIB1 PDCCH configuration information in the first SSB, the time-domain position of the first uplink resource may be determined based on the time-domain position where the Type0-PDCCH CSS set is located, and/or, the frequency-domain position of the first uplink resource may be determined based on the frequency-domain position where the Type0-PDCCH CSS set is located. For example, the time-domain position of the first uplink resource may include at least one of: a starting symbol of a first Type0-PDCCH CSS set among the two Type0-PDCCH CSS sets associated with the first SSB, an ending symbol of the first Type0-PDCCH CSS set among the two Type0-PDCCH CSS sets associated with the first SSB, a starting symbol of a second Type0-PDCCH CSS set among the two Type0-PDCCH CSS sets associated with the first SSB, or an ending symbol of the second Type0-PDCCH CSS set among the two Type0-PDCCH CSS sets associated with the first SSB. When the Type0-PDCCH CSS monitoring window shown in FIG. 5A to FIG. 5C is determined based on the SIB1 PDCCH configuration information in the second SSB, the terminal device may monitor a scheduling of the SIB1 message through the Type0-PDCCH CSS.

The method embodiments of the present disclosure have been described in detail above, and the device embodiments of the present disclosure are described in detail below. It is to be understood that the description of the method embodiments corresponds to that of the device embodiments, and the portions not described in detail in the device embodiments may refer to the method embodiments.

FIG. 6 is a schematic structural diagram of a terminal device 600 according to an embodiment of the present disclosure. The terminal device 600 includes a determination unit 610 and a first transmission unit 620.

The determination unit 610 is configured to determine a first uplink resource in a first cell.

The first transmission unit 620 is configured to transmit a first uplink channel/signal via the first uplink resource, where the first uplink channel/signal is used for requesting transmission of a first system message.

In some embodiments, the first system message may be a system message from the first cell or a system message from a second cell.

In some embodiments, the first system message includes an SSB; or the first system message includes an SIB1;

or the first system message includes the SSB and the SIB1.

In some embodiments, the determination of the first uplink resource in the first cell includes that: the first uplink resource is determined based on a first downlink resource, where the first downlink resource is a downlink resource in the first cell or a downlink resource in a second cell.

In some embodiments, the determination of the first uplink resource in the first cell includes that: the first uplink resource is determined based on a first downlink channel/signal received in the first downlink resource.

In some embodiments, the first downlink channel/signal includes a PSS and/or an SSS.

In some embodiments, the first downlink resource and the first uplink resource satisfy one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

In some embodiments, the terminal device 600 is further configured to receive the first system message via a second downlink resource.

In some embodiments, the second downlink resource is a downlink resource in the first cell or a downlink resource in a second cell.

In some embodiments, the first downlink resource and the second downlink resource are downlink resources in the same cell; or the first downlink resource and the second downlink resource are downlink resources in different cells.

In some embodiments, the first downlink resource and the second downlink resource satisfy one or more of: a relationship between a time-domain resource occupied by the first downlink resource and a time-domain resource occupied by the second downlink resource is predefined or preconfigured; a relationship between a frequency-domain resource occupied by the first downlink resource and a frequency-domain resource occupied by the second downlink resource is predefined or preconfigured; a relationship between spatial filter information associated with the first downlink resource and spatial filter information associated with the second downlink resource is predefined or preconfigured; or a relationship between a subcarrier spacing associated with the first downlink resource and a subcarrier spacing associated with the second downlink resource is predefined or preconfigured.

In some embodiments, the first uplink resource and the second downlink resource satisfy one or more of: a relationship between a time-domain resource occupied by the first uplink resource and a time-domain resource occupied by the second downlink resource is predefined or preconfigured; a relationship between a frequency-domain resource occupied by the first uplink resource and a frequency-domain resource occupied by the second downlink resource is predefined or preconfigured; a relationship between spatial filter information associated with the first uplink resource and spatial filter information associated with the second downlink resource is predefined or preconfigured; or a relationship between a subcarrier spacing associated with the first uplink resource and a subcarrier spacing associated with the second downlink resource is predefined or preconfigured.

In some embodiments, the first system message is the SIB1.

In some embodiments, the terminal device is further configured to: before the first uplink resource in the first cell is determined, receive a first SSB through a first downlink resource, where the first SSB is not associated with transmission of the SIB1.

In some embodiments, the first downlink resource is a downlink resource in the first cell or a downlink resource in a second cell.

In some embodiments, the first SSB includes a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

In some embodiments, the first information field indicates a subcarrier offset of the first SSB, when a frequency band to which the first downlink resource belongs is an FR1, the first value is 30 or 31; or when a frequency band to which the first downlink resource belongs is an FR2, the first value is 14 or 15.

In some embodiments, one or more of the following information in the first SSB have preset values: a common subcarrier spacing, a TypeA DMRS position, an SIB1 PDCCH configuration, a cell barred, an intra frequency reselection, or a spare bit.

In some embodiments, the determination of the first uplink resource in the first cell includes that: the first uplink resource is determined based on the first SSB.

In some embodiments, a second information field in the first SSB is used for determining a time-domain position and/or a frequency-domain position of the first uplink resource.

In some embodiments, the second information field includes an SIB1 PDCCH configuration information field for determining a Type0-PDCCH CSS set. The time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

In some embodiments, the first uplink resource and the Type 0-PDCCH CSS set satisfy one or more of: the time-domain position of the first uplink resource includes a first symbol of the time-domain position where the Type0-PDCCH CSS set is located; the time-domain position of the first uplink resource includes a last symbol of the time-domain position where the Type0-PDCCH CSS set is located; the frequency-domain position of the first uplink resource is the same as the frequency-domain position where the Type0-PDCCH CSS set is located; or a size of a frequency-domain resource for the first uplink resource is the same as a size of a frequency-domain resource for the Type0-PDCCH CSS set.

In some embodiments, the first downlink resource and the first uplink resource satisfy one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

In some embodiments, the terminal device 600 is further configured to receive a second SSB via a second downlink resource, where the second SSB is associated with transmission of the SIB1.

In some embodiments, the second downlink resource is a downlink resource in the first cell or a downlink resource in a second cell.

In some embodiments, the first downlink resource and the second downlink resource are downlink resources in the same cell; or the first downlink resource and the second downlink resource are downlink resources in different cells.

In some embodiments, the first downlink resource and the second downlink resource satisfy one or more of: a relationship between a time-domain resource occupied by the first downlink resource and a time-domain resource occupied by the second downlink resource is predefined or preconfigured; a relationship between a frequency-domain resource occupied by the first downlink resource and a frequency-domain resource occupied by the second downlink resource is predefined or preconfigured; a relationship between spatial filter information associated with the first downlink resource and spatial filter information associated with the second downlink resource is predefined or preconfigured; or a relationship between a subcarrier spacing associated with the first downlink resource and a subcarrier spacing associated with the second downlink resource is predefined or preconfigured.

In some embodiments, the first uplink resource and the second downlink resource satisfy one or more of: a relationship between a time-domain resource occupied by the first uplink resource and a time-domain resource occupied by the second downlink resource is predefined or preconfigured; a relationship between a frequency-domain resource occupied by the first uplink resource and a frequency-domain resource occupied by the second downlink resource is predefined or preconfigured; a relationship between spatial filter information associated with the first uplink resource and spatial filter information associated with the second downlink resource is predefined or preconfigured; or a relationship between a subcarrier spacing associated with the first uplink resource and a subcarrier spacing associated with the second downlink resource is predefined or preconfigured.

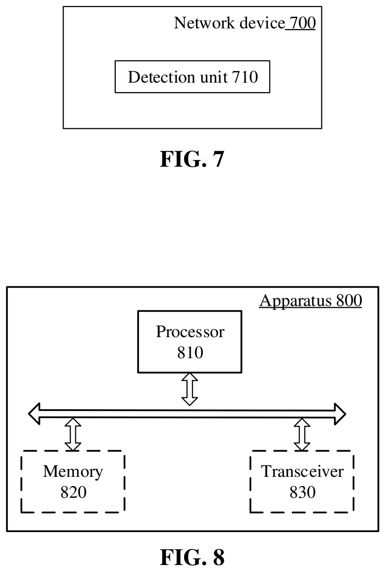

In an optional embodiment, the determination unit 610 may be a processor 810. The first transmission unit 620 may be a transceiver 830. The terminal device 600 may further include a memory 820, as specifically shown in FIG. 8.

FIG. 7 is a schematic structural diagram of a network device 700 according to an embodiment of the present disclosure. The network device 700 includes a detection 710.

The detection 710 in the network device is configured to detect a first uplink channel/signal via a first uplink resource in a first cell, where the first uplink channel/signal is used for requesting transmission of a first system message.

In some embodiments, the first system message may be a system message from the first cell or a system message from a second cell.

In some embodiments, the first system message includes an SSB; or the first system message includes an SIB1; or the first system message includes the SSB and the SIB1.

In some embodiments, the first uplink resource is determined based on a first downlink resource, where the first downlink resource is a downlink resource in the first cell or a downlink resource in a second cell.

In some embodiments, the first uplink resource is determined based on a first downlink channel/signal transmitted in the first downlink resource.

In some embodiments, the first downlink channel/signal includes a PSS and/or an SSS.

In some embodiments, the first downlink resource and the first uplink resource satisfy one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

In some embodiments, the network device 700 is further configured to: transmit the first system message via a second downlink resource if the network device receives the first uplink channel/signal in the first uplink resource.

In some embodiments, the second downlink resource is a downlink resource in the first cell or a downlink resource in a second cell.

In some embodiments, the first downlink resource and the second downlink resource are downlink resources in the same cell; or the first downlink resource and the second downlink resource are downlink resources in different cells.

In some embodiments, the first downlink resource and the second downlink resource satisfy one or more of: a relationship between a time-domain resource occupied by the first downlink resource and a time-domain resource occupied by the second downlink resource is predefined or preconfigured; a relationship between a frequency-domain resource occupied by the first downlink resource and a frequency-domain resource occupied by the second downlink resource is predefined or preconfigured; a relationship between spatial filter information associated with the first downlink resource and spatial filter information associated with the second downlink resource is predefined or preconfigured; or a relationship between a subcarrier spacing associated with the first downlink resource and a subcarrier spacing associated with the second downlink resource is predefined or preconfigured.

In some embodiments, the first uplink resource and the second downlink resource satisfy one or more of: a relationship between a time-domain resource occupied by the first uplink resource and a time-domain resource occupied by the second downlink resource is predefined or preconfigured; a relationship between a frequency-domain resource occupied by the first uplink resource and a frequency-domain resource occupied by the second downlink resource is predefined or preconfigured; a relationship between spatial filter information associated with the first uplink resource and spatial filter information associated with the second downlink resource is predefined or preconfigured; or a relationship between a subcarrier spacing associated with the first uplink resource and a subcarrier spacing associated with the second downlink resource is predefined or preconfigured.

In some embodiments, the first system message is the SIB1.

In some embodiments, the network device is further configured to: before the first uplink channel/signal is received via the first uplink resource in the first cell, transmit a first SSB via a first downlink resource, where the first SSB is not associated with transmission of the SIB1.

In some embodiments, the first downlink resource is a downlink resource in the first cell or a downlink resource in a second cell.

In some embodiments, the first SSB includes a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

In some embodiments, the first information field indicates a subcarrier offset of the first SSB, when a frequency band to which the first downlink resource belongs is an FR1, the first value is 30 or 31; or when a frequency band to which the first downlink resource belongs is an FR2, the first value is 14 or 15.

In some embodiments, one or more of the following information in the first SSB have preset values: a common subcarrier spacing, a position, an SIB1 PDCCH configuration, a cell barred, an intra frequency reselection, or a spare bit.

In some embodiments, the first uplink resource is determined based on the first SSB.

In some embodiments, a second information field in the first SSB is used for determining a time-domain position and/or a frequency-domain position of the first uplink resource.

In some embodiments, the second information field includes an SIB1 PDCCH configuration information field for determining a Type0-PDCCH CSS set. The time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

In some embodiments, the first uplink resource and the Type 0-PDCCH CSS set satisfy one or more of: the time-domain position of the first uplink resource includes a first symbol of the time-domain position where the Type0-PDCCH CSS set is located; the time-domain position of the first uplink resource includes a last symbol of the time-domain position where the Type0-PDCCH CSS set is located; the frequency-domain position of the first uplink resource is the same as the frequency-domain position where the Type0-PDCCH CSS set is located; or a size of a frequency-domain resource for the first uplink resource is the same as a size of a frequency-domain resource for the Type0-PDCCH CSS set.

In some embodiments, the first downlink resource and the first uplink resource satisfy one or more of: a relationship between a time-domain resource occupied by the first downlink resource and a time-domain resource occupied by the first uplink resource is predefined or preconfigured; a relationship between a frequency-domain resource occupied by the first downlink resource and a frequency-domain resource occupied by the first uplink resource is predefined or preconfigured; a relationship between spatial filter information associated with the first downlink resource and spatial filter information associated with the first uplink resource is predefined or preconfigured; or a relationship between a subcarrier spacing associated with the first downlink resource and a subcarrier spacing associated with the first uplink resource is predefined or preconfigured.

In some embodiments, the network device 700 is further configured to: when the network device receives the first uplink channel/signal in the first uplink resource, transmit a second SSB via a second downlink resource, where the second SSB is associated with transmission of the SIB1.

In some embodiments, the second downlink resource is a downlink resource in the first cell or a downlink resource in a second cell.

In some embodiments, the first downlink resource and the second downlink resource are downlink resources in the same cell; or the first downlink resource and the second downlink resource are downlink resources in different cells.

In some embodiments, the first downlink resource and the second downlink resource satisfy one or more of: a relationship between a time-domain resource occupied by the first downlink resource and a time-domain resource occupied by the second downlink resource is predefined or preconfigured; a relationship between a frequency-domain resource occupied by the first downlink resource and a frequency-domain resource occupied by the second downlink resource is predefined or preconfigured; a relationship between spatial filter information associated with the first downlink resource and spatial filter information associated with the second downlink resource is predefined or preconfigured; or a relationship between a subcarrier spacing associated with the first downlink resource and a subcarrier spacing associated with the second downlink resource is predefined or preconfigured.

In some embodiments, the first uplink resource and the second downlink resource satisfy one or more of: a relationship between a time-domain resource occupied by the first uplink resource and a time-domain resource occupied by the second downlink resource is predefined or preconfigured; a relationship between a frequency-domain resource occupied by the first uplink resource and a frequency-domain resource occupied by the second downlink resource is predefined or preconfigured; a relationship between spatial filter information associated with the first uplink resource and spatial filter information associated with the second downlink resource is predefined or preconfigured; or a relationship between a subcarrier spacing associated with the first uplink resource and a subcarrier spacing associated with the second downlink resource is predefined or preconfigured.

In an optional embodiment, the detection unit 710 may be the processor 810. The network device 700 may further include a memory 820 and a transceiver 830, as specifically shown in FIG. 8.

FIG. 8 is a schematic structural diagram of an apparatus according to an embodiment of the present disclosure. The dashed line in FIG. 8 indicates that the unit or module is optional. The apparatus 800 may be used to implement the methods described in the aforementioned method embodiments. The apparatus 800 may be a chip, a terminal device, or a network device.

The apparatus 800 may include one or more processors 810. The processor 810 may support the apparatus 800 to implement the methods described in the aforementioned method embodiments. The processor 810 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, any conventional processors, or the like.

The apparatus 800 may further include one or more memories 820. The memory 820 has stored thereon a program that is executable by the processor 810 to cause the processor 810 to perform each of the methods described in the aforementioned method embodiments. The memory 820 may be independent of the processor 810, or may be integrated into the processor 810.

The apparatus 800 may further include a transceiver 830. The processor 810 may communicate with other devices or chips through the transceiver 830. For example, the processor 810 may send data to other devices or chips, and receive data from other devices or chips through the transceiver 830.

An embodiment of the present disclosure further provides a computer-readable storage medium configured to store a program. The computer-readable storage medium may be applied to the terminal device or the network device in the embodiments of the present disclosure, and the program causes a computer to perform each of the methods performed by the terminal device or the network device in various embodiments of the present disclosure.

An embodiment of the present disclosure further provides a computer program product. The computer program product includes a program. The computer program product may be applied to the terminal device or network device in the embodiments of the present disclosure, and the program causes a computer to perform each of the methods performed by the terminal device or network device in various embodiments of the present disclosure.

An embodiment of the present disclosure further provides a computer program. The computer program may be applied to the terminal device or network device in the embodiments of the present disclosure, and the computer program causes a computer to perform each of the methods performed by the terminal device or network device in various embodiments of the present disclosure.

It is to be understood that in the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

It is to be understood that the term "and/or" in the disclosure is only an association relationship describing associated objects and represents that three relationships may exist. For example, A and/or B may represent three conditions: i.e., independent existence of A, existence of both A and B and independent existence of B. In addition, the character "/" in the present disclosure usually represents that previous and next associated objects form an "or" relationship.

It should be understood that in various embodiments of the present disclosure, an order of the sequence numbers of the above processes do not imply an order of execution, the order of execution of the processes should be determined according to the functions and internal logic thereof, and should not constitute any limitation on the implementation of the embodiments of the present disclosure.

It is to be understood that the term "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained through C; and it may also indicate that there is an association between A and B.

In the description of the embodiments of the present disclosure, the term "correspondence" may represent that there is a direct correspondence or an indirect correspondence between two items, may also represent that there is an association between the two items, and may also be a relationship such as indication and being indicated, configuration and being configured, etc.

The expression "configuration" in the embodiments of the present disclosure may include configuration by at least one of: a system message, radio resource control (RRC) signaling, or a media access control control element (MAC CE).

In some embodiments of the present disclosure, the expression "predefined" or "preset" may be achieved by pre-storing corresponding codes or tables in devices (e.g., including the terminal device and the network device) or by other means for indicating relevant information, and the specific implementation thereof is not limited in the present disclosure. For example, predefined may refer to what is defined in the protocol.

In some embodiments of the present disclosure, the "protocol" may be a standard protocol in the communication field. For example, the protocol may include an LTE protocol, an NR protocol, and related protocols to be applied in future communication systems, which are not limited in the present disclosure.

In the several embodiments provided in the present disclosure, it is to be understood that the disclosed systems, devices and methods may be implemented in other ways. For example, the device embodiments described above are only schematic, and for example, a division of the units is only a logic function division, and other division manners may be adopted during a practical implementation. For example, multiple units or components may be combined or integrated into another system, or some characteristics may be neglected or not executed. In addition, the displayed or discussed mutual coupling or direct coupling or communication connection may be an indirect coupling or communication connection implemented through some interfaces, devices or units, and may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions in the embodiments of the present disclosure.

In addition, functional units in various embodiments of the disclosure may be integrated into one processing unit, or each of the units may exist as a separate physical unit, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, flows or functions described in the embodiments of the present disclosure may be generated in whole or in part. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one web site, computer, server, or data center to another web site, computer, server, or data center in a wired (e.g., a coaxial cable, an optical fiber, a digital subscriber line (DSL)) manner or a wireless (e.g., an infrared, a wireless, a microwave, etc.) manner. The computer-readable storage medium may be any available medium that a computer may access or may be a data storage device such as a server, a data center, or the like that is integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description pertains only to specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:

   determining, by a terminal device, a first uplink resource in a first cell; and
   transmitting, by the terminal device, a first uplink channel/signal via the first uplink resource, wherein the first uplink channel/signal is used for requesting transmission of a first system message.

2. The method of claim 1, wherein the first system message is a system message from the first cell or a system message from a second cell.

3. The method of claim 1 or 2, wherein the first system message comprises a synchronization signal/physical broadcast channel (PBCH) block (SSB), or the first system message comprises a system information block 1 (SIB1), or the first system message comprises an SSB and an SIB1.

4. The method of claim 3, wherein determining, by the terminal device, the first uplink resource in the first cell comprises: determining, by the terminal device, the first uplink resource based on a first downlink resource, wherein the first downlink resource is a downlink resource in the first cell or a downlink resource in a second cell.

5. The method of claim 4, wherein determining, by the terminal device, the first uplink resource in the first cell comprises: determining, by the terminal device, the first uplink resource based on a first downlink channel/signal received in the first downlink resource.

6. The method of claim 5, wherein the first downlink channel/signal comprises: a primary synchronization signal (PSS) and/or a secondary synchronization signal (SSS).

7. The method of any one of claims 4 to 6, wherein the first downlink resource and the first uplink resource satisfy one or more of:

   a relationship between a time-domain resource occupied by the first downlink resource and a time-domain resource occupied by the first uplink resource is predefined or preconfigured;
   a relationship between a frequency-domain resource occupied by the first downlink resource and a frequency-domain resource occupied by the first uplink resource is predefined or preconfigured;
   a relationship between spatial filter information associated with the first downlink resource and spatial filter information associated with the first uplink resource is predefined or preconfigured; or
   a relationship between a subcarrier spacing associated with the first downlink resource and a subcarrier spacing associated with the first uplink resource is predefined or preconfigured.

8. The method of any one of claims 4 to 7, further comprising:
   receiving, by the terminal device, the first system message via a second downlink resource.

9. The method of claim 8, wherein the second downlink resource is the downlink resource in the first cell or the downlink resource in the second cell.

10. The method of claim 8 or 9, wherein the first downlink resource and the second downlink resource are downlink resources in the same cell; or the first downlink resource and the second downlink resource are downlink resources in different cells.

11. The method of any one of claims 8 to 10, wherein the first downlink resource and the second downlink resource satisfy one or more of:

a relationship between a time-domain resource occupied by the first downlink resource and a time-domain resource occupied by the second downlink resource is predefined or preconfigured;

a relationship between a frequency-domain resource occupied by the first downlink resource and a frequency-domain resource occupied by the second downlink resource is predefined or preconfigured;

a relationship between spatial filter information associated with the first downlink resource and spatial filter information associated with the second downlink resource is predefined or preconfigured; or

a relationship between a subcarrier spacing associated with the first downlink resource and a subcarrier spacing associated with the second downlink resource is predefined or preconfigured.

12. The method of any one of claims 8 to 11, wherein the first uplink resource and the second downlink resource satisfy one or more of:

a relationship between a time-domain resource occupied by the first uplink resource and a time-domain resource occupied by the second downlink resource is predefined or preconfigured;

a relationship between a frequency-domain resource occupied by the first uplink resource and a frequency-domain resource occupied by the second downlink resource is predefined or preconfigured;

a relationship between spatial filter information associated with the first uplink resource and spatial filter information associated with the second downlink resource is predefined or preconfigured; or

a relationship between a subcarrier spacing associated with the first uplink resource and a subcarrier spacing associated with the second downlink resource is predefined or preconfigured.

13. The method of claim 1 or 2, wherein the first system message is an SIB1.

14. The method of claim 13, further comprising:

before determining, by the terminal device, the first uplink resource in the first cell,

receiving, by the terminal device, a first SSB via a first downlink resource, wherein the first SSB is not associated with transmission of the SIB 1.

15. The method of claim 14, wherein the first downlink resource is a downlink resource in the first cell or a downlink resource in a second cell.

16. The method of claim 14 or 15, wherein the first SSB comprises a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

17. The method of claim 16, wherein the first information field indicates a subcarrier offset of the first SSB,

when a frequency band to which the first downlink resource belongs is a frequency range 1 (FR1), the first value is 30 or 31; or

when a frequency band to which the first downlink resource belongs is a FR2, the first value is 14 or 15.

18. The method of any one of claims 14 to 17, wherein one or more of the following information in the first SSB have preset values: a common subcarrier spacing, a TypeA demodulation reference symbol (DMRS) position, an SIB1 physical downlink control channel (PDCCH) configuration, a cell barred, an intra frequency reselection, or a spare bit.

19. The method of any one of claims 14 to 18, wherein determining, by the terminal device, the first uplink resource in the first cell comprises:
determining, by the terminal device, the first uplink resource based on the first SSB.

20. The method of claim 19, wherein a second information field in the first SSB is used for determining a time-domain position and/or a frequency-domain position of the first uplink resource.

21. The method of claim 20, wherein the second information field comprises an SIB1 PDCCH configuration information field for determining a Type0-PDCCH common search space (CSS) set, the time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

22. The method of claim 21, wherein the first uplink resource and the Type 0-PDCCH CSS set satisfy one or more of:

the time-domain position of the first uplink resource comprises a first symbol of the time-domain position where the Type0-PDCCH CSS set is located;
the time-domain position of the first uplink resource comprises a last symbol of the time-domain position where the Type0-PDCCH CSS set is located;
the frequency-domain position of the first uplink resource is the same as the frequency-domain position where the Type0-PDCCH CSS set is located; or
a size of a frequency-domain resource for the first uplink resource is the same as a size of a frequency-domain resource for the Type0-PDCCH CSS set.

23. The method of any one of claims 14 to 18, wherein the first downlink resource and the first uplink resource satisfy one or more of:

a relationship between a time-domain resource occupied by the first downlink resource and a time-domain resource occupied by the first uplink resource is predefined or preconfigured;
a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

24. The method of any one of claims 13 to 23, further comprising:
receiving, by the terminal device, a second SSB via a second downlink resource, wherein the second SSB is associated with transmission of the SIB 1.

25. The method of claim 24, wherein the second downlink resource is a downlink resource in the first cell or a downlink resource in a second cell.

26. The method of claim 24 or 25, wherein the first downlink resource and the second downlink resource are downlink resources in the same cell; or the first downlink resource and the second downlink resource are downlink resources in different cells.

27. The method of any one of claims 24 to 26, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

28. The method of any one of claims 24 to 27, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or

a relationship between a subcarrier spacing associated with the first uplink resource and a subcarrier spacing associated with the second downlink resource is predefined or preconfigured.

29. A method for wireless communication, comprising:

detecting, by a network device, a first uplink channel/signal via a first uplink resource, wherein the first uplink channel/signal is used for requesting transmission of a first system message.

30. The method of claim 29, wherein the first system message is a system message from a first cell or a system message from a second cell.

31. The method of claim 29 or 30, wherein the first system message comprises a synchronization signal/physical broadcast channel (PBCH) block (SSB), or the first system message comprises a system information block 1 (SIB1), or the first system message comprises an SSB and an SIB1.

32. The method of claim 31, wherein the first uplink resource is determined based on a first downlink resource, and the first downlink resource is a downlink resource in a first cell or a downlink resource in a second cell.

33. The method of claim 32, wherein the first uplink resource is determined based on a first downlink channel/signal transmitted in the first downlink resource.

34. The method of claim 33, wherein the first downlink channel/signal comprises: a primary synchronization signal (PSS) and/or a secondary synchronization signal (SSS).

35. The method of any one of claims 32 to 34, wherein the first downlink resource and the first uplink resource satisfy one or more of:

a relationship between a time-domain resource occupied by the first downlink resource and a time-domain resource occupied by the first uplink resource is predefined or preconfigured;

a relationship between a frequency-domain resource occupied by the first downlink resource and a frequency-domain resource occupied by the first uplink resource is predefined or preconfigured;

a relationship between spatial filter information associated with the first downlink resource and spatial filter information associated with the first uplink resource is predefined or preconfigured; or

a relationship between a subcarrier spacing associated with the first downlink resource and a subcarrier spacing associated with the first uplink resource is predefined or preconfigured.

36. The method of any one of claims 32 to 35, further comprising:

when the network device receives the first uplink channel/signal in the first uplink resource, transmitting, by the network device, the first system message via a second downlink resource.

37. The method of claim 36, wherein the second downlink resource is the downlink resource in the first cell or the downlink resource in the second cell.

38. The method of claim 36 or 37, wherein the first downlink resource and the second downlink resource are downlink resources in the same cell; or the first downlink resource and the second downlink resource are downlink resources in different cells.

39. The method of any one of claims 36 to 38, wherein the first downlink resource and the second downlink resource satisfy one or more of:

a relationship between a time-domain resource occupied by the first downlink resource and a time-domain resource occupied by the second downlink resource is predefined or preconfigured;

a relationship between a frequency-domain resource occupied by the first downlink resource and a frequency-domain resource occupied by the second downlink resource is predefined or preconfigured;

a relationship between spatial filter information associated with the first downlink resource and spatial filter information associated with the second downlink resource is predefined or preconfigured; or

a relationship between a subcarrier spacing associated with the first downlink resource and a subcarrier spacing associated with the second downlink resource is predefined or preconfigured.

40. The method of any one of claims 36 to 39, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

41. The method of claim 29 or 30, wherein the first system message is an SIB1.

42. The method of claim 41, further comprising:

before receiving, by the network device, the first uplink channel/signal via the first uplink resource in a first cell, transmitting, by the network device, a first SSB via a first downlink resource, wherein the first SSB is not associated with transmission of the SIB 1.

43. The method of claim 42, wherein the first downlink resource is a downlink resource in the first cell or a downlink resource in a second cell.

44. The method of claim 42 or 43, wherein the first SSB comprises a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

45. The method of claim 44, wherein the first information field indicates a subcarrier offset of the first SSB,

when a frequency band to which the first downlink resource belongs is a frequency range 1 (FR1), the first value is 30 or 31; or
when a frequency band to which the first downlink resource belongs is a FR2, the first value is 14 or 15.

46. The method of any one of claims 34 to 45, wherein one or more of the following information in the first SSB have preset values: a common subcarrier spacing, a TypeA demodulation reference symbol (DMRS) position, an SIB1 physical downlink control channel (PDCCH) configuration, a cell barred, an intra frequency reselection, or a spare bit.

47. The method of any one of claims 34 to 46, wherein the first uplink resource is determined based on a first SSB.

48. The method of claim 47, wherein a second information field in the first SSB is used for determining a time-domain position and/or a frequency-domain position of the first uplink resource.

49. The method of claim 48, wherein the second information field comprises an SIB1 PDCCH configuration information field for determining a Type0-PDCCH common search space (CSS) set, the time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

50. The method of claim 49, wherein the first uplink resource and the Type0-PDCCH CSS set satisfy one or more of:

the time-domain position of the first uplink resource comprises a first symbol of the time-domain position where the Type0-PDCCH CSS set is located;
the time-domain position of the first uplink resource comprises a last symbol of the time-domain position where the Type0-PDCCH CSS set is located;
the frequency-domain position of the first uplink resource is the same as the frequency-domain position where the Type0-PDCCH CSS set is located; or
a size of a frequency-domain resource for the first uplink resource is the same as a size of a frequency-domain resource for the Type0-PDCCH CSS set.

51. The method of any one of claims 34 to 46, wherein the first downlink resource and the first uplink resource satisfy one or more of:

a relationship between a time-domain resource occupied by the first downlink resource and a time-domain resource occupied by the first uplink resource is predefined or preconfigured;
a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

52. The method of any one of claims 41 to 51, further comprising:
when the network device receives the first uplink channel/signal in the first uplink resource, transmitting, by the network device, a second SSB via a second downlink resource, wherein the second SSB is associated with transmission of the SIB1.

53. The method of claim 52, wherein the second downlink resource is a downlink resource in a first cell or a downlink resource in a second cell.

54. The method of claim 52 or 53, wherein the first downlink resource and the second downlink resource are downlink resources in the same cell; or the first downlink resource and the second downlink resource are downlink resources in different cells.

55. The method of any one of claims 52 to 54, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

56. The method of any one of claims 52 to 55, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

57. A terminal device, comprising:

a determination unit, configured to determine a first uplink resource in a first cell; and
a first transmission unit, configured to transmit a first uplink channel/signal via the first uplink resource, wherein the first uplink channel/signal is used for requesting transmission of a first system message.

58. The terminal device of claim 57, wherein the first system message is a system message from the first cell or a system message from a second cell.

**59.** The terminal device of claim 57 or 58, wherein the first system message comprises a synchronization signal/physical broadcast channel (PBCH) block (SSB), or the first system message comprises a system information block 1 (SIB1), or the first system message comprises an SSB and an SIB1.

**60.** The terminal device of claim 59, wherein the determination of the first uplink resource in the first cell comprises: determining the first uplink resource based on a first downlink resource, wherein the first downlink resource is a downlink resource in the first cell or a downlink resource in a second cell.

**61.** The terminal device of claim 60, wherein the determination of the first uplink resource in the first cell comprises: determining the first uplink resource based on a first downlink channel/signal received in the first downlink resource.

**62.** The terminal device of claim 61, wherein the first downlink channel/signal comprises: a primary synchronization signal (PSS) and/or a secondary synchronization signal (SSS).

**63.** The terminal device of any one of claims 60 to 62, wherein the first downlink resource and the first uplink resource satisfy one or more of:

a relationship between a time-domain resource occupied by the first downlink resource and a time-domain resource occupied by the first uplink resource is predefined or preconfigured;
a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

**64.** The terminal device of any one of claims 60 to 63, wherein the terminal device is further configured to: receive the first system message via a second downlink resource.

**65.** The terminal device of claim 64, wherein the second downlink resource is the downlink resource in the first cell or the downlink resource in the second cell.

**66.** The terminal device of claim 64 or 65, wherein the first downlink resource and the second downlink resource are downlink resources in the same cell; or the first downlink resource and the second downlink resource are downlink resources in different cells.

**67.** The terminal device of any one of claims 64 to 66, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

**68.** The terminal device of any one of claims 64 to 67, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

69. The terminal device of claim 57 or 58, wherein the first system message is an SIB1.

70. The terminal device of claim 69, wherein the terminal device is further configured to:

before the first uplink resource in the first cell is determined,
receive a first SSB via a first downlink resource, wherein the first SSB is not associated with transmission of the SIB1.

71. The terminal device of claim 70, wherein the first downlink resource is a downlink resource in the first cell or a downlink resource in a second cell.

72. The terminal device of claim 70 or 71, wherein the first SSB comprises a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

73. The terminal device of claim 72, wherein the first information field indicates a subcarrier offset of the first SSB,

when a frequency band to which the first downlink resource belongs is a frequency range 1 (FR1), the first value is 30 or 31; or
when a frequency band to which the first downlink resource belongs is a FR2, the first value is 14 or 15.

74. The terminal device of any one of claims 70 to 73, wherein one or more of the following information in the first SSB have preset values: a common subcarrier spacing, a TypeA demodulation reference symbol (DMRS) position, an SIB1 physical downlink control channel (PDCCH) configuration, a cell barred, an intra frequency reselection, or a spare bit.

75. The terminal device of any one of claims 70 to 74, wherein the determination of the first uplink resource in the first cell comprises:
determining the first uplink resource based on the first SSB.

76. The terminal device of claim 75, wherein a second information field in the first SSB is used for determining a time-domain position and/or a frequency-domain position of the first uplink resource.

77. The terminal device of claim 76, wherein the second information field comprises an SIB1 PDCCH configuration information field for determining a Type0-PDCCH common search space (CSS) set, the time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

78. The terminal device of claim 77, wherein the first uplink resource and the Type 0-PDCCH CSS set satisfy one or more of:

the time-domain position of the first uplink resource comprises a first symbol of the time-domain position where the Type0-PDCCH CSS set is located;
the time-domain position of the first uplink resource comprises a last symbol of the time-domain position where the Type0-PDCCH CSS set is located;
the frequency-domain position of the first uplink resource is the same as the frequency-domain position where the Type0-PDCCH CSS set is located; or
a size of a frequency-domain resource for the first uplink resource is the same as a size of a frequency-domain resource for the Type0-PDCCH CSS set.

79. The terminal device of any one of claims 70 to 74, wherein the first downlink resource and the first uplink resource satisfy one or more of:

a relationship between a time-domain resource occupied by the first downlink resource and a time-domain resource occupied by the first uplink resource is predefined or preconfigured;

a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

80. The terminal device of any one of claims 69 to 79, wherein the terminal device is further configured to:
receive a second SSB via a second downlink resource, wherein the second SSB is associated with transmission of the SIB 1.

81. The terminal device of claim 80, wherein the second downlink resource is a downlink resource in the first cell or a downlink resource in a second cell.

82. The terminal device of claim 80 or 81, wherein the first downlink resource and the second downlink resource are downlink resources in the same cell; or the first downlink resource and the second downlink resource are downlink resources in different cells.

83. The terminal device of any one of claims 80 to 82, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

84. The terminal device of any one of claims 80 to 83, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

85. A network device, comprising:
a detection unit, configured to detect a first uplink channel/signal via a first uplink resource in a first cell, wherein the first uplink channel/signal is used for requesting transmission of a first system message.

86. The network device of claim 85, wherein the first system message is a system message from the first cell or a system message from a second cell.

87. The network device of claim 85 or 86, wherein the first system message comprises a synchronization signal/physical broadcast channel (PBCH) block (SSB), or the first system message comprises a system information block 1 (SIB1), or the first system message comprises an SSB and an SIB1.

88. The network device of claim 87, wherein the first uplink resource is determined based on a first downlink resource, and the first downlink resource is a downlink resource in the first cell or a downlink resource in a second cell.

89. The network device of claim 88, wherein the first uplink resource is determined based on a first downlink channel/-signal transmitted in the first downlink resource.

90. The network device of claim 89, wherein the first downlink channel/signal comprises: a primary synchronization signal (PSS) and/or a secondary synchronization signal (SSS).

91. The network device of any one of claims 88 to 90, wherein the first downlink resource and the first uplink resource satisfy one or more of:

a relationship between a time-domain resource occupied by the first downlink resource and a time-domain resource occupied by the first uplink resource is predefined or preconfigured;
a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

92. The network device of any one of claims 88 to 91, wherein the network device is further configured to:
when the network device receives the first uplink channel/signal in the first uplink resource, transmit the first system message via a second downlink resource.

93. The network device of claim 92, wherein the second downlink resource is the downlink resource in the first cell or the downlink resource in the second cell.

94. The network device of claim 92 or 93, wherein the first downlink resource and the second downlink resource are downlink resources in the same cell; or the first downlink resource and the second downlink resource are downlink resources in different cells.

95. The network device of any one of claims 92 to 94, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

96. The network device of any one of claims 92 to 95, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

97. The network device of claim 85 or 86, wherein the first system message is an SIB1.

98. The network device of claim 97, wherein the network device is further configured to:

before the first uplink channel/signal is received via the first uplink resource in the first cell,
transmit a first SSB via a first downlink resource, wherein the first SSB is not associated with transmission of the SIB1.

**99.** The network device of claim 98, wherein the first downlink resource is a downlink resource in the first cell or a downlink resource in a second cell.

**100.**
The network device of claim 98 or 99, wherein the first SSB comprises a first information field; and when a value of the first information field is a first value, the first information field is used for determining that the first SSB is not associated with the transmission of the SIB1, or the first information field is used for determining that the terminal device is able to transmit the first uplink channel/signal via the first uplink resource.

**101.**
The network device of claim 100, wherein the first information field indicates a subcarrier offset of the first SSB,

when a frequency band to which the first downlink resource belongs is a frequency range 1 (FR1), the first value is 30 or 31; or
when a frequency band to which the first downlink resource belongs is a FR2, the first value is 14 or 15.

**102.**
The network device of any one of claims 90 to 101, wherein one or more of the following information in the first SSB have preset values: a common subcarrier spacing, a TypeA demodulation reference symbol (DMRS) position, an SIB1 physical downlink control channel (PDCCH) configuration, a cell barred, an intra frequency reselection, or a spare bit.

**103.**
The network device of any one of claims 90 to 102, wherein the first uplink resource is determined based on a first SSB.

**104.**
The network device of claim 103, wherein a second information field in the first SSB is used for determining a time-domain position and/or a frequency-domain position of the first uplink resource.

**105.**
The network device of claim 104, wherein the second information field comprises an SIB 1 PDCCH configuration information field for determining a Type0-PDCCH common search space (CSS) set, the time-domain position of the first uplink resource is determined based on a time-domain position where the Type0-PDCCH CSS set is located, and/or the frequency-domain position of the first uplink resource is determined based on a frequency-domain position where the Type0-PDCCH CSS set is located.

**106.**
The network device of claim 105, wherein the first uplink resource and the Type0-PDCCH CSS set satisfy one or more of:

the time-domain position of the first uplink resource comprises a first symbol of the time-domain position where the Type0-PDCCH CSS set is located;
the time-domain position of the first uplink resource comprises a last symbol of the time-domain position where the Type0-PDCCH CSS set is located;
the frequency-domain position of the first uplink resource is the same as the frequency-domain position where the Type0-PDCCH CSS set is located; or
a size of a frequency-domain resource for the first uplink resource is the same as a size of a frequency-domain resource for the Type0-PDCCH CSS set.

**107.**
The network device of any one of claims 90 to 102, wherein the first downlink resource and the first uplink resource satisfy one or more of:

a relationship between a time-domain resource occupied by the first downlink resource and a time-domain resource occupied by the first uplink resource is predefined or preconfigured;
a relationship between a frequency-domain resource occupied by the first downlink resource and a frequency-domain resource occupied by the first uplink resource is predefined or preconfigured;
a relationship between spatial filter information associated with the first downlink resource and spatial filter information associated with the first uplink resource is predefined or preconfigured; or
a relationship between a subcarrier spacing associated with the first downlink resource and a subcarrier spacing associated with the first uplink resource is predefined or preconfigured.

**108.**
The network device of any one of claims 97 to 107, wherein the network device is further configured to:
when the network device receives the first uplink channel/signal in the first uplink resource, transmit a second SSB via a second downlink resource, wherein the second SSB is associated with transmission of the SIB1.

**109.**
The network device of claim 108, wherein the second downlink resource is a downlink resource in the first cell or a downlink resource in a second cell.

**110.**
The network device of claim 108 or 109, wherein the first downlink resource and the second downlink resource are downlink resources in the same cell; or the first downlink resource and the second downlink resource are downlink resources in different cells.

**111.** The network device of any one of claims 108 to 110, wherein the first downlink resource and the second downlink resource satisfy one or more of:

a relationship between a time-domain resource occupied by the first downlink resource and a time-domain resource occupied by the second downlink resource is predefined or preconfigured;
a relationship between a frequency-domain resource occupied by the first downlink resource and a frequency-domain resource occupied by the second downlink resource is predefined or preconfigured;
a relationship between spatial filter information associated with the first downlink resource and spatial filter information associated with the second downlink resource is predefined or preconfigured; or
a relationship between a subcarrier spacing associated with the first downlink resource and a subcarrier spacing associated with the second downlink resource is predefined or preconfigured.

**112.**
The network device of any one of claims 108 to 111, wherein the first uplink resource and the second downlink resource satisfy one or more of:

a relationship between a time-domain resource occupied by the first uplink resource and a time-domain resource occupied by the second downlink resource is predefined or preconfigured;
a relationship between a frequency-domain resource occupied by the first uplink resource and a frequency-domain resource occupied by the second downlink resource is predefined or preconfigured;
a relationship between spatial filter information associated with the first uplink resource and spatial filter information associated with the second downlink resource is predefined or preconfigured; or
a relationship between a subcarrier spacing associated with the first uplink resource and a subcarrier spacing associated with the second downlink resource is predefined or preconfigured.

**113.**
A terminal device, comprising a memory and a processor, wherein the memory is configured to store a program, and the processor is configured to call the program in the memory to enable the terminal device to perform the method of any one of claims 1 to 28.

**114.**
A network device, comprising a memory and a processor, wherein the memory is configured to store a program, and the processor is configured to call the program in the memory to enable the network device to perform the method of any one of claims 29 to 56.

**115.**
An apparatus, comprising a processor configured to call a program from a memory to enable the apparatus to perform the method of any one of claims 1 to 56.

**116.**
A chip, comprising: a processor configured to call a program from a memory, to enable a device on which the chip is mounted to perform the method of any one of claims 1 to 56.

**117.**

A computer-readable storage medium configured to store a program, wherein the program causes a computer to perform the method of any one of claims 1 to 56.

**118.**

A computer program product, comprising a program, wherein the program causes a computer to perform the method of any one of claims 1 to 56.

**119.**

A computer program, wherein the computer program causes a computer to perform the method of any one of claims 1 to 56.

100

110

120                120

**FIG. 1A**

1102

1101

**FIG. 1B**

1202

1201

1203

**FIG. 1C**

Terminal device

Network device

S210 Determining a first uplink resource in a first cell

S212 Determining a first uplink resource in a first cell

S220 A first uplink channel/signal

S230 Detecting the first uplink channel/signal

**FIG. 2**

←————————————————Slot————————————————→

| 0 | 1 | 2 | 3 | 4 | 5 | 6 | 7 | 8 | 9 | 10 | 11 | 12 | 13 |

PSS    SSS          SSB request          PSS    SSS          SSB request

**FIG. 3A**

←————————————————————Slot————————————————————→

DL | 0 | 1 | 2 | 3 | 4 | 5 | 6 | 7 | 8 | 9 | 10 | 11 | 12 | 13 |

PSS    SSS                                    PSS    SSS

UL | 0 | 1 | 2 | 3 | 4 | 5 | 6 | 7 | 8 | 9 | 10 | 11 | 12 | 13 |

SSB request                          SSB request

# FIG. 3B

**FIG. 4**

**FIG. 5A**

**FIG. 5B**

Offset value
determined
based on O

Slot

M=2    | i=0 | | i=0 | | i=1 | | i=1 | | i=2 | | i=2 | | i=3 | | i=3 | |    ...

Monitoring
window
corresponding
to SSB0

Monitoring
window
corresponding
to SSB1

Monitoring
window
corresponding
to SSB2

Monitoring
window
corresponding
to SSB3

**FIG. 5C**

Terminal device 600

Determination unit 610

First transmission unit
620

**FIG. 6**

Network device 700

Detection unit 710

**FIG. 7**

Apparatus 800

Processor
810

Memory
820

Transceiver
830

**FIG. 8**

## INTERNATIONAL SEARCH REPORT

International application No.

**PCT/CN2023/110007**

### A. CLASSIFICATION OF SUBJECT MATTER

H04W 72/1268(2023.01)i

According to International Patent Classification (IPC) or to both national classification and IPC

### B. FIELDS SEARCHED

Minimum documentation searched (classification system followed by classification symbols)

IPC:H04W; H04L; H04B

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 系统信息, 系统消息, 请求, 需要, 按需, 获取, 传输, 触发, 同步信号, 关联, system information, SI, SIB, SIB1, MIB, on demand, on-demand, request, trigger, SSB, PSS, related, corresponding

### C. DOCUMENTS CONSIDERED TO BE RELEVANT

| Category* | Citation of document, with indication, where appropriate, of the relevant passages | Relevant to claim No. |
|---|---|---|
| X | CN 106656442 A (HUAWEI TECHNOLOGIES CO., LTD.) 10 May 2017 (2017-05-10) description, paragraphs 36-142 | 1-119 |
| X | CN 108632766 A (CHINA ACADEMY OF TELECOMMUNICATIONS TECHNOLOGY) 09 October 2018 (2018-10-09) description, paragraphs 91-143 | 1-119 |
| X | WO 2018010126 A1 (GUANGDONG OPPO MOBILE TELECOMMUNICATIONS CORP., LTD.) 18 January 2018 (2018-01-18) description, page 9, line 19-page 12, line 5 | 1-119 |
| X | CN 108810827 A (HUAWEI TECHNOLOGIES CO., LTD.) 13 November 2018 (2018-11-13) description, paragraphs 110-136 | 1-119 |
| A | CN 116367186 A (HUAWEI TECHNOLOGIES CO., LTD.) 30 June 2023 (2023-06-30) entire document | 1-119 |
| A | WO 2018028663 A1 (HUAWEI TECHNOLOGIES CO., LTD.) 15 February 2018 (2018-02-15) entire document | 1-119 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 March 2024** | **07 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/110007**

### C.   DOCUMENTS CONSIDERED TO BE RELEVANT

| Category* | Citation of document, with indication, where appropriate, of the relevant passages | Relevant to claim No. |
|---|---|---|
| A | NOKIA et al. "No SIB1 indication for ANR" *3GPP TSG-RAN WG2 Meeting #103, R2-1812293*, 24 August 2018 (2018-08-24), entire document | 1-119 |

Form PCT/ISA/210 (second sheet) (July 2022)

## INTERNATIONAL SEARCH REPORT
### Information on patent family members

International application No.

**PCT/CN2023/110007**

| Patent document cited in search report | | | Publication date (day/month/year) | Patent family member(s) | | | Publication date (day/month/year) |
|---|---|---|---|---|---|---|---|
| CN | 106656442 | A | 10 May 2017 | WO | 2017071473 | A1 | 04 May 2017 |
| | | | | US | 2018249387 | A1 | 30 August 2018 |
| | | | | EP | 3358777 | A1 | 08 August 2018 |
| | | | | KR | 20180075585 | A | 04 July 2018 |
| | | | | JP | 2018532347 | A | 01 November 2018 |
| | | | | CN | 110855415 | A | 28 February 2020 |
| | | | | CN | 111083714 | A | 28 April 2020 |
| CN | 108632766 | A | 09 October 2018 | None | | | |
| WO | 2018010126 | A1 | 18 January 2018 | EP | 3445071 | A1 | 20 February 2019 |
| | | | | KR | 20190029516 | A | 20 March 2019 |
| | | | | EP | 3799477 | A1 | 31 March 2021 |
| | | | | JP | 2019525520 | A | 05 September 2019 |
| | | | | US | 2019297542 | A1 | 26 September 2019 |
| | | | | CN | 109247072 | A | 18 January 2019 |
| | | | | JP | 2021093754 | A | 17 June 2021 |
| CN | 108810827 | A | 13 November 2018 | US | 2020068489 | A1 | 27 February 2020 |
| | | | | EP | 3611943 | A1 | 19 February 2020 |
| | | | | WO | 2018202112 | A1 | 08 November 2018 |
| | | | | JP | 2020520593 | A | 09 July 2020 |
| | | | | KR | 20200003188 | A | 08 January 2020 |
| CN | 116367186 | A | 30 June 2023 | WO | 2023124718 | A1 | 06 July 2023 |
| WO | 2018028663 | A1 | 15 February 2018 | CN | 107734466 | A | 23 February 2018 |

Form PCT/ISA/210 (patent family annex) (July 2022)